(19) Europäisches Patentamt / European Patent Office / Office européen des brevets

(11) **EP 1 495 552 B1**

(12) **EUROPÄISCHE PATENTSCHRIFT**

(45) Veröffentlichungstag und Bekanntmachung des Hinweises auf die Patenterteilung:
**26.05.2010 Patentblatt 2010/21**

(21) Anmeldenummer: **03727151.7**

(22) Anmeldetag: **24.03.2003**

(51) Int Cl.:
*H04B 1/707* *(2006.01)*

(86) Internationale Anmeldenummer:
**PCT/DE2003/000963**

(87) Internationale Veröffentlichungsnummer:
**WO 2003/088516 (23.10.2003 Gazette 2003/43)**

(54) **VERFAHREN UND VORRICHTUNG ZUR BERECHNUNG EINES ITERIERTEN ZUSTANDS EINER RUECKGEKOPPELTEN SCHIEBEREGISTERANORDNUNG**

METHOD AND DEVICE FOR CALCULATING AN ITERATED STATE OF FEEDBACK SHIFT REGISTER ARRANGEMENT

PROCEDE ET DISPOSITIF POUR LE CALCUL D'UN ETAT ITERE D'UN ENSEMBLE REGISTRE A DECALAGE A BOUCLE FERMEE

(84) Benannte Vertragsstaaten:
**DE FR GB**

(30) Priorität: **12.04.2002 DE 10216240**

(43) Veröffentlichungstag der Anmeldung:
**12.01.2005 Patentblatt 2005/02**

(73) Patentinhaber: **Infineon Technologies AG**
**85579 Neubiberg (DE)**

(72) Erfinder: **DENK, Robert**
**85567 Grafing (DE)**

(74) Vertreter: **Lange, Thomas**
**Patentanwälte**
**Lambsdorff & Lange**
**Dingolfinger Strasse 6**
**81673 München (DE)**

(56) Entgegenhaltungen:
WO-A-03/028239    US-A- 6 005 888
US-A- 6 038 577

• **ANONYMOUS: "Universal Mobile Telecommunications System (UMTS); Spreading and modulation (FDD) (3GPP TS 25.213 version 4.2.0 Release 4)" ETSI TS 125 213, [Online] Dezember 2001 (2001-12), Seite 1-27 XP002251078 Gefunden im Internet: <URL: www.etsi.org> [gefunden am 2003-08-12] in der Anmeldung erwähnt**

**Beschreibung**

Die Erfindung betrifft ein Verfahren sowie eine Vorrichtung zur Bestimmung eines n Bit umfassenden, N-fach iterierten Endzustands einer Schieberegisteranordnung aus einem gegebenen, n Bit umfassenden Anfangszustand der Schieberegisteranordnung. Des weiteren betrifft die Erfindung die Erzeugung von um N Bit verschobenen Pseudo-Noise-Folgen, welche insbesondere als Spreizfolgen in CDMA-basierten Mobilfunksystemen (CDMA: Code Division Multiple Access) verwendet werden.

In einem CDMA-Mobilfunksystem werden Spreizfolgen eingesetzt, um verschiedene Zellen und Teilnehmer im Mobilfunknetz unterscheiden zu können. Zu diesem Zweck wird jedem Benutzer und jedem logischen Kanal eine andere Folge der Werte -1 und 1 zugeordnet. Dadurch kann das dem einzelnen Benutzer zugeordnete Signal empfangen, von den anderen Signalen getrennt und rekonstruiert werden. Dies bezeichnet man als Code Division Multiple Access (CDMA). Wichtige CDMA-Übertragungssysteme sind das in den USA verwendete System IS-95 und das System UMTS, welches im 3rd Genereration Partnership Project (3GPP) spezifiziert wird. Die genaue Beschreibung der verwendeten Codierung für UMTS ist in "3GPP: Spreading and modulation (FDD)", 3rd Generation Partnership Project TS 25.213 V4.2.0 (2001-12), zu finden.

Alle verwendeten Spreizcodes lassen sich auf Folgen der Binärwerte 0 und 1 zurückführen. Bei diesen Folgen kann es sich beispielsweise um sogenannte Pseudo-Noise-Folgen handeln, welche durch definierte Autokorrelations- und Kreuzkorrelationseigenschaften gekennzeichnet sind. Während in der theoretischen Darstellung eine Pseudo-Noise-Folge als Folge der Binärwerte 0 und 1 dargestellt wird, handelt es sich bei der tatsächlich verwendeten Spreizfolge um eine Folge der Werte +1 und -1. Aus dem Binärwert 0 wird in der tatsächlichen Spreizfolge jeweils der Wert +1.

Pseudo-Noise-Folgen sind durch eine Iterationsvorschrift definiert, wobei die Iteration im Körper GF(2), also im Zahlenkörper mit den beiden Elementen 0 und 1, ausgeführt wird. Theoretische Grundlage der Pseudo-Noise-Folgen und der definierenden Iterationsvorschrift ist die Theorie irreduzibler primitiver Polynome über dem Körper GF(2). Eine Darstellung dieser Theorie und ihrer Anwendung im Mobilfunkbereich findet sich zum Beispiel in "CDMA Systems Engineering Handbook" von J.S. Lee, L.E. Miller, Artech House, Boston/London, 1998, und dort insbesondere in Kapitel 6.

Jede individuelle Pseudo-Noise-Folge ist eindeutig festgelegt durch den Initialisierungszustand des Codegenerators, also durch die ersten Werte der Folge, sowie durch das für die Iteration verwendete Polynom. Dabei ist das Polynom und damit die Iterationsvorschrift in Mobilfunkanwendungen entweder für das gesamte Netzwerk festgelegt, oder es kommen insgesamt nur einige wenige verschiedene Polynome zur Anwendung, wie dies zum Beispiel bei UMTS-Systemen für die Definition der sogenannten Scrambling-Codes der Fall ist. Der Initialisierungszustand (d.h. die Belegung des als Codegenerator arbeitenden Schieberegisters zu Beginn der Codererzeugung) hingegen ist für jede individuelle Pseudo-Noise-Folge verschieden.

Diese ersten Werte der Folge und damit der Initialisierungszustand der Register des Codegenerators können aus verschiedenen Gründen unbekannt sein. Ein unbekannter Initialisierungszustand tritt auf, wenn die Codierung zu einem anderen Zeitpunkt gestartet werden soll als die Signalübertragung selbst. Dieser Fall tritt bei UMTS im sogenannten Compressed Mode auf; nähere Informationen zu diesem Modus finden sich in "3GPP: Physical channels and mapping of transport channels onto physical channels (FDD)", 3rd Generation Partnership Project TS 25.211, Release 1999.

Der Anfang der Folge und damit der Initialisierungszustand der Register ist auch dann nicht bekannt, wenn die Code-Nummer nicht direkt die Registerbelegung im Initialisierungszustand festlegt, sondern statt dessen eine Verschiebung der verwendeten Pseudo-Noise-Folge um eine gewisse Anzahl von Bits definiert. So wird zum Beispiel in UMTS entsprechend dem 3GPP-Standard der Code der Nummer N als eine Verschiebung um N Bit einer fest vorgegebenen Pseudo-Noise-Folge definiert. Nähere Informationen zu dem Zusammenhang zwischen der Code-Nummer und der zugehörigen Pseudo-Noise-Folge finden sich in "3GPP: Spreading and modulation (FDD)", 3rd Generation Partnership Project TS 25.213, V4.2.0 (2001-12), und zwar insbesondere in Abschnitt 5.2.

Um den Codegenerator starten zu können, muss also in beiden Fällen zunächst der Initialisierungszustand des Schieberegisters berechnet werden. Wenn das Schieberegister des Codegenerators mit den Anfangswerten der gesuchten Folge initialisiert ist, können im anschließenden Normalbetrieb die weiteren Folgenwerte durch einfache Register-Operationen ohne Schwierigkeiten erzeugt werden.

Eine erste Möglichkeit zur Berechnung des Initialisierungszustands des Schieberegisters besteht darin, dass die Folge zum ursprünglichen Anfangszeitpunkt gestartet und anschließend N-fach iteriert wird. Auf diese Weise kann die gewünschte, um N Bit verschobene Folge erhalten werden. Erst dann wird die Ausgabe des Schieberegisters als Code verwendet.

In bisherigen Systemen des Stands der Technik wird diese Lösung praktiziert, d.h. vor der Ausgabe der gewünschten Pseudo-Noise-Folge wird der Registerinhalt der Schieberegisterstruktur N-fach iteriert, und erst nach der Durchführung dieser Vorab-Iterationen, welche den Initialisierungszustand einstellen, wird mit der Ausgabe der eigentlichen, um N Bit verschobenen Pseudo-Noise-Folge begonnen. Ein Nachteil dieser Vorgehensweise ist, dass die Anzahl der benötigten Operationen proportional zur Größe der gewünschten Verschiebung N ist. Durch diese Variabilität wird die Kontrolle der zeitlichen Gesamtabfolge erschwert. Ein weiterer Nachteil besteht darin, dass bei großen Werten der gewünschten Verschiebung N der rechnerische und zeitliche Aufwand sehr groß wird. Bei UMTS-Systemen treten im Empfangsbetrieb der Mobilstation Offsets im Bereich von N = 0 bis N = 262142 auf. Da mit der Erzeugung der gewünschten Pseudo-Noise-Folge gewartet werden muss, bis der gewünschte Offset erreicht ist, bedeutet dies eine inakzeptable Verzögerung des Sende- bzw. Empfangsvorgangs.

Eine alternative Möglichkeit besteht darin, zu jeder gewünschten Verschiebung N die zugehörige Belegung des Schieberegisters im Initialisierungszustand in einer Tabelle (ROM: Read Only Memory) zu speichern. Damit wird die Vorlaufzeit des Schieberegisters praktisch zu Null gesetzt. Der Nachteil besteht darin, dass ein großer Speicherbereich belegt werden muss.

In US 6,005,888 ist ein Verfahren zur Erzeugung einer Abgriffmaske für Pseudo-Noise-Generatoren beschrieben. Die Koeffizienten für die Abgriffmaske werden durch Lösung einer Gleichung unter Anwendung der Methode des Koeffizientenvergleichs bestimmt.

In US 6,038,577 ist ein Verfahren zur Erzeugung einer verzögerten Version einer Ausgangssequenz einer Schieberegisteranordnung beschrieben. Hierzu wird eine Abgriffmaske eingesetzt, wobei die Berechnung der Koeffizienten für die Abgriffmaske durch eine Polynom-Division, die durch ein separates Schieberegister durchgeführt wird, vorgenommen wird.

Es ist Aufgabe der Erfindung, zu einem gegebenen Anfangszustand einer Schieberegisteranordnung den N-fach iterierten Endzustand bzw. die um N Bit verschobene Pseudo-Noise-Folge auf möglichst aufwandsgünstigem Wege zu berechnen. Insbesondere soll ein sinnvoller Kompromiss zwischen Speicherbedarf und Berechnungszeitdauer erreichbar sein.

Diese Aufgabe der Erfindung wird durch ein Verfahren zur Bestimmung eines n Bit umfassenden, N-fach iterierten Endzustands nach Anspruch 1, durch eine Vorrichtung zur Bestimmung eines n Bit umfassenden, N-fach iterierten Endzustands nach Anspruch 14 sowie durch die Verwendung dieser Vorrichtung zur Erzeugung einer Spreizfolge gemäß Anspruch 21 gelöst.

Bei dem erfindungsgemäßen Verfahren zur Bestimmung eines n Bit umfassenden, N-fach iterierten Endzustands einer Schieberegisteranordnung aus einem gegebenen, n Bit umfassenden Anfangszustand der Schieberegisteranordnung ist die Iterationsvorschrift durch das charakteristische Polynom

$$f(x) = 1 + c_1 \cdot x + c_2 \cdot x^2 + \ldots + c_{n-1} \cdot x^{n-1} + x^n$$

mit $c_1, c_2, \ldots, c_{n-1} \in \{0; 1\}$ gegeben. Erfindungsgemäß wird eine einer Anzahl N' von Schieberegisteroperationen entsprechende Zustandsänderung der Schieberegisteranordnung, mit $0 < N' \leq N$, durch die Schritte berechnet: Bestimmen einer für N' Schieberegisteroperationen charakteristischen Abgriffmaske, und Durchführen von n Schieberegisteroperationen, wobei unter Verwendung der Abgriffmaske die n Bit eines N'-fach iterierten Zustands der Schieberegisteranordnung erhalten werden. Die Bestimmung der für N' Schieberegisteroperationen charakteristischen Abgriffmaske gliedert sich in zwei Teilschritte: In einem ersten Teilschritt wird die Zahl N' gemäß $N' = \sum_{j=1}^{k'} N_{i(j)}$ zerlegt. Anschließend wird die für N' Schieberegisteroperationen charakteristische Abgriffmaske durch Polynom-Multiplikation von k' Abgriffmasken $m_{i(j)}(x)$, mit j = 1, .., k', aus einer begrenzten Zahl vorab berechneter Abgriffmasken $m_i(x)$ bestimmt. Dabei ist jede der k' Abgriffmasken $m_{i(j)}(x)$ für die jeweiligen $N_{i(j)}$ Schieberegisteroperationen charakteristisch.

Die Erfindung beruht also auf der Erkenntnis, dass ein um N' Iterationen weiterentwickelter Zustand der Schieberegisteranordnung durch die Bestimmung einer geeigneten Abgriffmaske für die Schieberegisteranordnung und die nachfolgende Ausführung von n Schieberegisteroperationen berechnet bzw. generiert werden kann. Wenn in besonders bevorzugter Weise N = N' ist, wird der gesuchte Endzustand ausgehend vom Anfangszustand nahezu vollständig (bis auf die verbleibenden n Schieberegisteroperationen) durch die explizite Berechnung der Abgriffmaske zu N erhalten. Im Vergleich zu dem Stand der Technik, bei welchem der Endzustand durch eine N-fache Iteration der Schieberegisteranordnung erhalten wird, besteht der Vorteil der Erfindung darin, dass die Bestimmung der Abgriffmaske mit wesentlich geringerem Zeitaufwand möglich ist, als die Durchführung von N Vorab-Interationen (es wird darauf hingewiesen, dass N in vielen Anwendungsgebieten sehr groß ist).

Dieser Vorteil bleibt im wesentlichen erhalten, wenn N' < N gilt, d.h. eine Zustandsänderung der Schieberegisteranordnung bezüglich nur einer Teilanzahl N' der benötigten N Iterationen durch Berechnung der zugehörigen Abgriffmaske und nachfolgender Durchführung von n Schieberegisteroperationen berechnet wird. Die restlichen N-N' Iterationen der Schieberegisteranordnung können dann vor oder nach oder sowohl teilweise vor als auch teilweise nach der erfindungsgemäßen Berechnung eines N'-fach iterierten Schieberegisterzustands - z.B. in Form direkter Schieberegisteroperationen oder auf andere Weise - durchgeführt werden.

Vorteilhaft ist ferner, dass die Bestimmung der Abgriffmaske von einem Prozessor vorgenommen werden kann, während die Durchführung der N Vorab-Iterationen im Stand der Technik aus Zeitgründen zwingend in Hardware, d.h. von einem realen Schieberegister, durchzuführen ist. Im Vergleich zu dem erwähnten alternativen Vorgehen, bei welchem sämtliche Endzustände der Schieberegisteranordnung in einer Tabelle abgelegt sind, ermöglicht die Erfindung eine wesentliche Speicherplatzeinsparung.

Es wird darauf hingewiesen, dass im Sprachgebrauch der vorliegenden Schrift der Begriff "Schieberegisteranordnung" lediglich die Funktionalität eines rückgekoppelten Schieberegisters bedeutet und nicht das Vorhandensein eines realen Schieberegister impliziert. Eine Schieberegisteranordnung kann also z.B. in Form eines Prozessors realisiert sein, welcher eine geeignete Software abarbeitet. Ein reales ("festverdrahtetes") Schieberegister wird in dieser Schrift gemäß üblichem Sprachgebrauch als "Schieberegister" bezeichnet.

Die Abgriffmaske ist vorzugsweise durch das Polynom

$$m(x) = \left[x^{N'}\right] \bmod f$$

der Form

$$m(x) = m_0 + m_1 \cdot x + m_2 \cdot x^2 + \ldots + m_{n-1} \cdot x^{n-1}$$

mit dem Koeffizientensatz $m_0, m_1,..., m_{n-1} \in \{0; 1\}$ sowie der Rechenvorschrift definiert, dass genau dann ein Abgriff der i-ten Zelle der Schieberegisteranordnung vorgenommen wird, wenn $m_i = 1$ gilt, und dass bei jeder Schieberegisteroperation eine Modulo-Zwei-Addition der abgegriffenen Bits durchgeführt wird. In diesem Fall kennzeichnet sich eine bevorzugte Verfahrensvariante dadurch, dass der Schritt des Bestimmens der Abgriffmaske die Schritte umfasst: Zerlegen von N gemäß

$$N = \sum_{i=1}^{k} N_i$$

in eine Summe aus k ganzen Zahlen $N_i$, wobei k > 1 ist, und, sofern N' = N, Bestimmen der für N Schieberegisteroperationen charakteristischen Abgriffmaske aus den für die $N_i$, i = 1, .., k, Schieberegisteroperationen charakteristischen Abgriffmasken nach

$$m(x) = \prod_{i=1}^{k} m_i(x) \bmod f \, ,$$

wobei $m_i(x) = [x^{N_i}] \bmod f$ ist.

Sofern N' < N gilt, sind aus allen Summanden $N_i$ diejenigen Summanden $N_{i(j)}$, für die $N' = \sum_{j=1}^{k'} N_{i(j)}$ gilt, auszuwählen, wobei k' < k ist. Anschließend wird die für N' Schieberegisteroperationen charakteristische Abgriffmaske aus den für die $N_{i(j)}$, j = 1, .. , k', Schieberegisteroperationen charakteristischen Abgriffmasken nach

$$m(x) = \prod_{j=1}^{k'} m_{i(j)}(x) \bmod f, \quad \text{wobei} \quad m_{i(j)}(x) = \left[ x^{N_{i(j)}} \right] \bmod f$$

ist, berechnet.

Die Zerlegung ermöglicht also, die gesuchte Abgriffmaske m(x) aus einer begrenzten Zahl vorab berechneter Abgriffmasken $m_i(x)$ durch eine einfache Rechenoperation (Polynom-Multiplikation) zu berechnen. Diese Maßnahme schafft die Möglichkeit, durch die Wahl der Zerlegungsbasis den Kompromiß zwischen Speicherplatzbedarf (für die Speicherung der vorab berechneten Abgriffmasken $m_i(x)$) und Rechenaufwand (für die auf den Abgriffmasken $m_i(x)$ basierende Ermittlung von m(x) durch Polynom-Multiplikation) nach Wunsch festzulegen. Dieser Freiheitsgrad, welcher in der Wahl einer geeigneten Zerlegungsbasis besteht, ermöglicht die Anpassung des erfindungsgemäßen Verfahrens an unterschiedlichste Hardware-Software-Voraussetzungen.

Zweckmäßigerweise sind die Koeffizientensätze der Polynome $m_i(x)$ zu der Zerlegungsbasis in einem Speicher abgelegt. In diesem Fall umfasst das Verfahren vorzugsweise den Schritt des Auslesens der Koeffizientensätze der

Polynome $m_{i(j)}(x)$ zu der Zerlegung $N' = \sum_{j=1}^{k'} N_{i(j)}$ (welche für N' = N den Koeffizientensätzen der Polynome $m_i$

(x) zu der Zerlegung $N = \sum_{i=1}^{k} N_i$ entsprechen) aus dem Speicher.

Vorzugsweise wird der n Bit umfassende, N-fach iterierte Endzustand als Initialisierungszustand für die Erzeugung einer um N Bit verschobenen Pseudo-Noise-Folge verwendet. Als Pseudo-Noise-Folge wird eine Folge von Binärwerten bezeichnet, welche von einer rückgekoppelten, durch ein irreduzibles Polynom beschriebenen Schieberegisteranordnung erzeugt wird. Wie bereits erläutert, wird eine Pseudo-Noise-Folge zum einen durch den Initialisierungszustand der Schieberegisteranordnung und zum anderen durch das charakteristische Polynom der Schieberegisteranordnung festgelegt. Wenn der mittels des erfindungsgemäßen Verfahrens berechnete, N-fach iterierte Endzustand als Initialisierungszustand für die Erzeugung einer Pseudo-Noise-Folge verwendet wird, dann bedeutet dies, dass die Pseudo-Noise-Folge sofort an der gewünschten, um N Bit verschobenen Stelle gestartet werden kann. Ausgehend vom Initialisierungszustand werden dann die weiteren Folgenwerte durch Schieberegisteroperationen geliefert.

Insoweit kennzeichnet sich eine vorteilhafte Maßnahme des erfindungsgemäßen Verfahrens dadurch, dass nach dem Schritt der Berechnung des iterierten Endzustands dieser Endzustand als Initialisierungszustand in ein n Schieberegisterzellen umfassendes ("reales") Schieberegister mit einer durch das charakteristische Polynom f(x) definierten äußeren Funktionsbeschaltung eingeschrieben wird. Dieses Schieberegister bildet dann den Codegenerator bzw. einen Bestandteil desselben.

Die n Schieberegisteroperationen zur Berechnung des iterierten Endzustands (Schritt b) können entweder von einem Prozessor durchgeführt werden, oder es bietet sich die Möglichkeit, dass ein Schieberegister, insbesondere das Schieberegister des Codegenerators, hierfür eingesetzt wird. In letzterem Fall ist das Schieberegister ferner mit einer durch die Abgriffmaske steuerbaren Abgriffbeschaltung versehen, und es werden mittels dieser Abgriffbeschaltung die n Bit des N'-fach iterierten Zustands erhalten, welche dann - ggf. nach Durchführung der restlichen N-N' Iterationen - den Initialisierungszustand des Codegenerators bilden. Das Schieberegister des Codegenerators erzeugt in diesem Fall unter Verwendung der Abgriffmaske seinen eigenen Initialisierungszustand.

Die erfindungsgemäße Vorrichtung zur Bestimmung eines n Bit umfassenden, N-fach iterierten Endzustandes einer Schieberegisteranordnung aus einem gegebenen, n Bit umfassenden Anfangszustand der Schieberegisteranordnung umfasst ein Mittel zum Bestimmen einer für N' Schieberegisteroperationen dieser Schieberegisteranordnung charakteristischen Abgriffmaske, wobei N' eine ganze Zahl mit $0 < N' \leq N$ ist, und ein Mittel zum Durchführen von n Schieberegisteroperationen, wobei unter Verwendung der Abgriffmaske die n Bit eines N'-fach iterierten Zustands der Schieberegisteranordnung erhalten werden. Sofern N' = N ist, wird, wie bereits erwähnt, in vorteilhafter Weise ohne weitere Iterationen ausführen zu müssen aus dem Anfangszustand direkt der Endzustand der Schieberegisteranordnung generiert. Das Mittel zum Bestimmen einer für N' Schieberegisteroperationen charakteristischen Abgriffmaske umfasst

ein Mittel zum Berechnen einer Zerlegung von N' gemäß $N' = \sum_{j=1}^{k'} N_{i(j)}$ sowie ein Mittel zum Bestimmen der für N' Schieberegisteroperationen charakteristischen Abgriffmaske anhand von k' Abgriffmasken $m_{i(j)}(x)$, mit j = 1, k'. Dabei ist jede der k' Abgriffmasken $m_{i(j)}(x)$ für die jeweiligen $N_{i(j)}$ Schieberegisteroperationen charakteristisch.

Von besonderem Vorteil ist ferner, wenn die Vorrichtung einen Speicher umfasst, in welchem die Koeffizientensätze für eine Mehrzahl von für $N_i$ Schieberegisteroperationen charakteristischen Abgriffmasken zu den charakteristischen Polynomen mi (x) abgelegt sind, wobei $m_i(x) = [x^{N_i}] \mod f$ ist. Es ergibt sich in diesem Fall die Möglichkeit, die gesuchte Abgriffmaske m(x) durch eine unter Berücksichtigung der Beschränkungen für Speichergröße und Rechenaufwand optimierte Kombination von Speicherzugriffen und Berechnungsschritten zu bewerkstelligen.

Eine besonders bevorzugte Ausgestaltung der Erfindung kennzeichnet sich dadurch, dass sowohl das Mittel zum Bestimmen einer für N' Schieberegisteroperationen der Schieberegisteranordnung charakteristischen Abgriffmaske als auch das Mittel zum Durchführen von n Schieberegisteroperationen unter Verwendung der Abgriffmaske in Form eines Prozessors realisiert sind. In diesem Fall werden sämtliche Berechnungsschritte des erfindungsgemäßen Verfahrens (d.h. sämtliche Schritte zur Berechnung des Endzustandes der Schieberegisteranordnung) von dem Prozessor ausgeführt. Ein rückgekoppeltes Schieberegister ist lediglich dann erforderlich, wenn der berechnete Endzustand als Initialisierungszustand für die Erzeugung einer Pseudo-Noise-Folge verwendet werden soll, d.h. wenn ein in Hardware ausgeführter Codegenerator zum Einsatz kommt.

Eine weitere ebenfalls bevorzugte Möglichkeit besteht darin, dass das Mittel zum Bestimmen einer für N' Schieberegisteroperationen der Schieberegisteranordnung charakteristischen Abgriffmaske in Form eines Prozessors realisiert ist, und dass das Mittel zum Durchführen von n Schieberegisteroperationen unter Verwendung der Abgriffmaske in Form eines n Schieberegisterzellen umfassenden Schieberegisters mit einer durch das charakteristische Polynom f (x) definierten äußeren Funktionsbeschaltung und einer durch die berechnete Abgriffmaske-steuerbaren Abgriffbeschaltung realisiert ist. In diesem Fall werden also auch die n Schieberegisteroperationen von einem realen, in Hardware ausgeführten Schieberegister realisiert. Im Falle der Erzeugung eines Pseudo-Noise-Codes ist ein solches Schieberegister mit einer Funktionsbeschaltung (als Codegenerator) bereits vorhanden, so dass durch Hinzufügung einer die Abgriffmaske realisierenden Abgriffbeschaltung das Schieberegister des Codegenerators zur Durchführung der n Schieberegisteroperationen für die Bestimmung des Endzustandes (der dann als Initialisierungszustand für die Code-Erzeugung genutzt wird) mitbenutzt werden kann.

Nachfolgend wird die Erfindung anhand von mehreren in der Zeichnung dargestellten Ausführungsbeispielen näher beschrieben. Es zeigen:

Fig. 1    ein Schaltbild eines rückgekoppelten Schieberegisters mit Abgriffbeschaltung;

Fig. 2    ein Schaltbild eines Codegenerators, wie er in UMTS zur Erzeugung des Scrambling Codes im Downlink verwendet wird; und

Fig. 3    eine schematische Darstellung von zwei in derselben Figur dargestellten Ausführungsbeispielen der Erfindung.

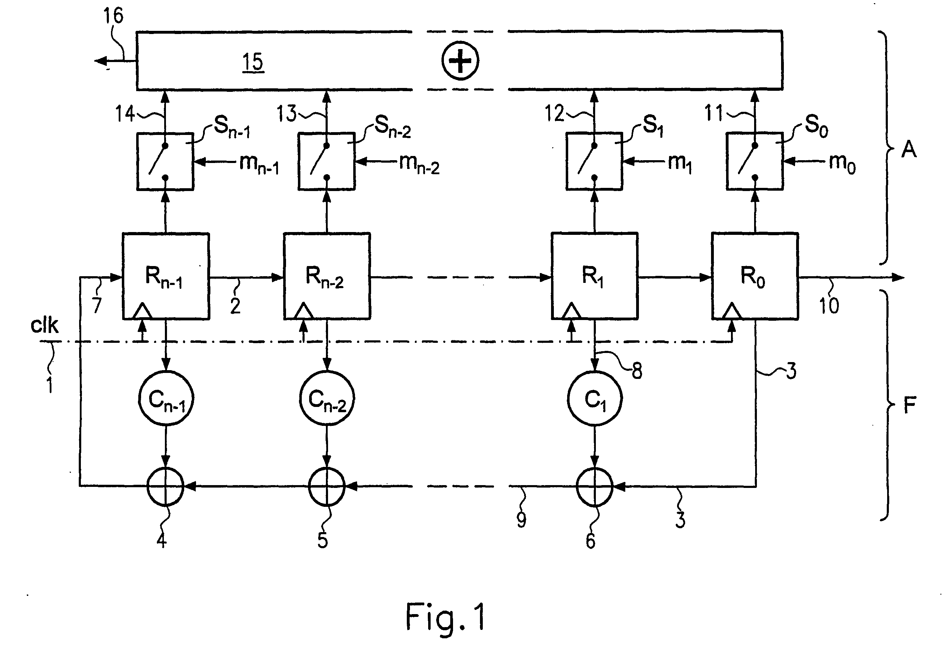

Fig. 1 zeigt die Struktur eines Schieberegisters mit zwei äußeren Beschaltungen (Funktionsbeschaltung F und Abgriffbeschaltung A). Das Schieberegister umfasst n Registerzellen $R_0$, $R_1$, ..., $R_{n-2}$, $R_{n-1}$, wobei der Registerinhalt einer Zelle jeweils die Werte 0 oder 1 annehmen kann. Über die gemeinsame Taktleitung 1 werden den Registerzellen Taktimpulse clk zugeführt. Mit jedem Taktimpuls wird der Inhalt einer Registerzelle mit Index i (i = 1, 2, ..., n-1) in die Registerzelle mit Index i-1 übernommen. Hierzu ist der Ausgang einer Registerzelle jeweils mit dem Eingang der Registerzelle mit nächst kleinerem Index verbunden. Beispielsweise ist der Ausgang der Registerzelle $R_{n-1}$ über die Signalleitung 2 mit dem Eingang der Registerzelle $R_{n-2}$ verbunden. Dadurch kann erreicht werden, dass die anfangs vorliegende Bitsequenz mit jedem Taktimpuls clk um eine Registerzelle bzw. um eine Bitposition nach rechts geschoben wird.

Zunächst wird die Funktionsbeschaltung F erläutert. Das an der Registerzelle $R_0$ abgreifbare Signal 3 wird durch eine Anzahl von XOR-Gattern 4, 5, 6 modifiziert, um das Signal 7 zu erhalten, das am Eingang der ersten Registerzelle $R_{n-1}$ anliegt. Die Art und Weise, wie das an der Zelle $R_0$ abgreifbare Signal 3 modifiziert wird, um das Rückkopplungssignal 7 zu erhalten, wird durch die Koeffizienten $c_1$ ..., $c_{n-2}$, $c_{n-1}$ festgelegt, welche jeweils den Wert 0 oder 1 annehmen können. Wenn $c_i$ den Wert 0 hat, dann bedeutet dies, dass das am Ausgang der Registerzelle $R_i$ abgreifbare Signal keinerlei Einfluss auf das Rückkopplungssignal 7 hat. Wenn beispielsweise $c_1 = 0$ ist, dann wird das Signal 3 durch das an der Registerzelle $R_1$ abgreifbare Signal 8 nicht modifiziert. Das am ersten Eingang des XOR-Gatters 6 anliegende Signal 3 gelangt unverändert zum Ausgang des XOR-Gatters 6, so dass das Signal 9 dem Signal 3 entspricht. Wenn der Koeffizient $c_1 = 0$ ist, dann kann das XOR-Gatter 6 daher auch weggelassen und durch eine direkte Verbindung zwischen dem Signal 3 und dem Signal 9 ersetzt werden.

Wenn ein Koeffizient $c_i$ (mit i = 1, 2, ..., n-1) dagegen gleich 1 ist, dann trägt das an der Registerzelle $R_i$ abgreifbare Signal zum Rückkopplungssignal 7 bei. Wenn beispielsweise $c_1 = 1$ ist, dann wird das Signal 8 im XOR-Gatter 6 mit dem an der Registerzelle $R_0$ abgreifbaren Signal 3 XOR-verknüpft, so dass man das modifizierte Signal 9 erhält. Da eine XOR-Verknüpfung als Modulo-Zwei-Addition beschrieben werden kann, sind die XOR-Gatter 4, 5 und 6 in Fig. 1 als Modulo-Zwei-Addierer eingezeichnet.

Die Rekursionsvorschrift für ein Schieberegister mit einer Funktionsbeschaltung der in Fig. 1 gezeigten Art wird durch ein charakteristisches Polynom der Form

$$f(x) = 1 + c_1 \cdot x + c_2 \cdot x^2 + \ldots + c_{n-1} \cdot x^{n-1} + x^n$$

vorgegeben, wobei die Koeffizienten $c_1, c_2, \ldots, c_{n-1}$ den in Fig. 1 eingezeichneten Koeffizienten entsprechen und insofern die Werte 0 oder 1 annehmen können. Im Bereich der Codierung bzw. Decodierung von Signalen werden als Polynome $f(x)$ irreduzible Polynome verwendet. Irreduzible Polynome sind dadurch gekennzeichnet, dass sie sich nicht als Produkt von mindestens zwei Faktoren darstellen lassen, die ihrerseits auch Polynome mit einem Grad größer 0 über dem Körper GF(2) sind. Irreduzible Polynome lassen sich also nicht in Polynome von niedrigerem Grad faktorisieren.

Zum Zeitpunkt 0 seien die Anfangswerte der Registerzellen $R_0$, $R_1$, ..., $R_{n-1}$ gegeben al s $x_0(0)$, $x_1(0)$, ..., $x_{n-1}$ (0). Die Werte $x_0(t+1)$, $x_1(t+1)$, ..., $x_{n-1}(t+1)$ der Register zum Zeitpunkt t+1 lassen sich jeweils aus den Werten der Register $x_0(t)$, $x_1(t)$, ..., $x_{n-1}(t)$ zum Zeitpunkt t anhand folgender Rekursionsvorschrift herleiten:

$$
\begin{aligned}
x_0(t+1) &= x_1(t), \\
x_1(t+1) &= x_2(t), \\
&\;\;\vdots \\
x_{n-2}(t+1) &= x_{n-1}(t), \\
x_{n-1}(t+1) &= x_0(t) + c_1 \cdot x_1(t) + c_2 \cdot x_2(t) + \ldots + c_{n-1} \cdot x_{n-1}(t)
\end{aligned}
$$

Bei der hier verwendeten Addition handelt es sich wie erwähnt um eine Modulo-Zwei-Addition, also um eine XOR-Operation. Wenn es sich bei $f(x)$ um ein irreduzibles Polynom handelt, dann kann am Ausgang 10 des Schieberegisters als Signal eine sogenannte Pseudo-Noise-Folge

$$x_0(0), \; x_0(1), \; x_0(2), \; x_0(3), \; \ldots$$

(entspricht dem Signal 3) abgegriffen werden. Mit jedem Taktimpuls clk an der Taktleitung 1 erscheint ein neuer Folgenwert am Ausgang 10 des Schieberegisters.

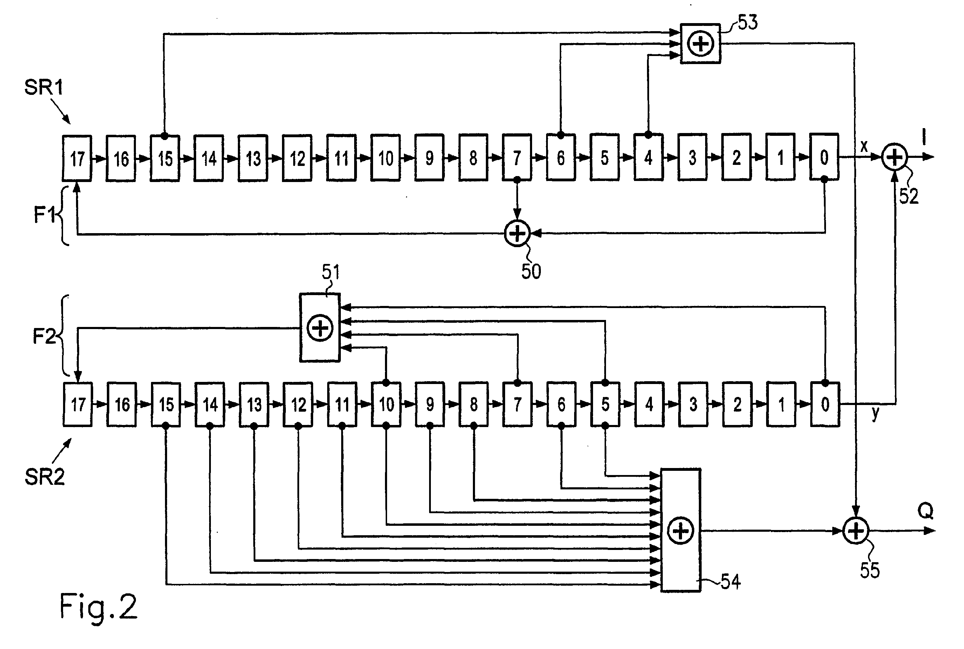

Die Pseudo-Noise-Folgen, die sich mit der in Fig. 1 gezeigten Hardware erzeugen lassen, weisen geeignete Korrelationseigenschaften für die Signalcodierung auf. In CDMA-Verfahren wie UMTS oder IS-95 werden daher derartige Pseudo-Noise-Folgen zur sender- und empfängerseitigen Erzeugung von Spreizfolgen verwendet (dies wird in Fig. 2 anhand eines speziellen Beispiels noch näher erläutert). Die in Fig. 1 gezeigte Schieberegisterstruktur stellt daher eine geeignete Hardware für die Erzeugung von Spreizfolgen in Mobilstationen und Basisstationen dar, welche als Übertragungsstandard ein CDMA-Verfahren verwenden.

Der Registervektor

$$
\begin{pmatrix}
x_0(t) \\
x_1(t) \\
\vdots \\
x_{n-2}(t) \\
x_{n-1}(t)
\end{pmatrix}
$$

stellt den Inhalt der Registerzellen $R_0$, $R_1$, ..., $R_{n-1}$ zum Zeitpunkt t dar. Wenn man die n x n Matrix T definiert als

$$
T = \begin{pmatrix}
0 & 1 & 0 & \cdots & & 0 & 0 \\
0 & 0 & 1 & & & & 0 \\
\vdots & & & \ddots & & & \vdots \\
& & & & & 1 & 0 \\
0 & & & & & 0 & 1 \\
1 & c_1 & c_2 & \cdots & & c_{n-2} & c_{n-1}
\end{pmatrix},
$$

dann lässt sich die Rekursionsvorschrift folgendermaßen formulieren:

$$
\begin{pmatrix}
x_0(t+1) \\
x_1(t+1) \\
\vdots \\
x_{n-2}(t+1) \\
x_{n-1}(t+1)
\end{pmatrix} = T \cdot \begin{pmatrix}
x_0(t) \\
x_1(t) \\
\vdots \\
x_{n-2}(t) \\
x_{n-1}(t)
\end{pmatrix}.
$$

Die n x n Matrix T wird auch als charakteristische Matrix der Rekursion bezeichnet. Eine einmalige Iteration der Code-Folge kann also als Multiplikation der Matrix T mit dem Registervektor dargestellt werden. Entsprechend lässt sich eine Verschiebung der Code-Folge um einen Offset N als Multiplikation des Registervektors mit der Matrix $T^N$ darstellen:

$$
\begin{pmatrix}
x_0(t+N) \\
x_1(t+N) \\
\vdots \\
x_{n-2}(t+N) \\
x_{n-1}(t+N)
\end{pmatrix} = T^N \cdot \begin{pmatrix}
x_0(t) \\
x_1(t) \\
\vdots \\
x_{n-2}(t) \\
x_{n-1}(t)
\end{pmatrix}.
$$

Eine direkte Berechnung der N-ten Potenz der Matrix T wäre jedoch noch aufwändiger als die aus dem Stand der Technik bekannte Ausführung von N Vorab-Iterationen des Schieberegisters.

Die Fig. 1 illustriert die erfindungsgemäße Vorgehensweise, um den Zustand des Schieberegisters nach N Vorab-Iterationen zu berechnen. Die Berechnung erfolgt auf der Basis einer Abgriffmaske für das Schieberegister, welche hier zur Verdeutlichung des durch die Abgriffmaske bewirkten Algorithmus in Form einer äußeren Abgriffbeschaltung A des Schieberegisters eingezeichnet ist (und ggf. auch als eine solche realisiert sein kann).

Die Abgriffbeschaltung A umfasst n Schalter $S_0$, $S_1$, ..., $S_{n-2}$, $S_{n-1}$, die mit Abgriffen an den Speicherzellen $R_0$, $R_1$, ..., $R_{n-2}$, $R_{n-1}$ jeweils des gleichen Index verbunden sind. Die Schalter $S_0$, $S_1$, ..., $S_{n-2}$, $S_{n-1}$ werden jeweils durch Schalt- bzw. Steuersignale $m_0$, $m_1$, ..., $m_{n-2}$, $m_{n-1}$ geschaltet, und zwar in der Weise, dass der Schalter $S_i$ geschlossen ist, wenn $m_i = 1$ ist, und geöffnet ist, falls $m_i = 0$ ist, i = 0, 1, ..., n-1.

Die Ausgänge 11, 12, 13 und 14 der Schalter $S_0$, $S_1$, ..., $S_{n-2}$, $S_{n-1}$ werden einem Modulo-Zwei-Addierer 15 zugeleitet. Der Ausgang des Modulo-Zwei-Addierers 15 ist mit dem Bezugzeichen 16 bezeichnet.

Das Schieberegister liege im Anfangszustand vor, und es soll der Zustand nach N Schieberegisteroperationen berechnet werden. Die Abgriffmaske, d.h. die Stellungen der Schalter So, $S_1$, ..., $S_{n-2}$, $S_{n-1}$, wird durch die Polynomdi-

vision m(x) =$x^N$ / f(x) mod f definiert. Mit anderen Worten gilt m(x) = [$x^N$] mod f, wobei die Division im Polynomring über GF(2) ausgeführt wird. Das Polynom m(x) ist dabei höchstens vom Grad n-1. Seine Koeffizienten $m_0$, $m_1$, . ..., $m_{n-1}$ geben die Steuersignale für die Abgriffmaske vor.

Wenn die Abgriffmaske zu N bekannt ist, müssen nur noch n Schieberegisteroperationen ausgeführt werden, um am Ausgang 16 die n Werte für den gesuchten Endzustand des Schieberegisters nach N Schieberegisteroperationen zu erhalten.

Die Berechnung der Koeffizienten $m_0$, $m_1$, ..., $m_{n-1}$ erfolgt üblicherweise mittels eines Prozessors. Da nach der Bestimmung der Koeffizienten $m_0$, $m_1$,..., $m_{n-1}$ nur noch n Schieberegisteroperationen durchgeführt werden müssen, kann auch der durch die Abgriffbeschaltung A realisierte Rechenvorgang mittels des Prozessors durchgeführt werden. In diesem Fall ist die gesamte in Fig. 1 dargestellte "Schieberegisteranordnung" in Form eines Programms realisiert, welches den Prozessor die entsprechenden Rechenschritte (erst die Berechnung der Koeffizienten $m_0$, $m_1$, ..., $m_{n-1}$, dann die Durchführung der n Schieberegisteroperationen) ausführen lässt.

Eine der wichtigsten Anwendungen der Erfindung liegt in der Erzeugung von Spreizfolgen für CDMA-Übertragungssysteme. Dies wird im folgenden anhand eines Beispiels erläutert.

In UMTS existieren im wesentlichen drei verschiedene Typen von Scrambling-Codes, welche jeweils aus einer Folge von komplexen Zahlen bestehen. Die sogenannten langen Codes bestehen aus 38400 Zahlen und weisen innerhalb eines Zeitrahmens von 10 ms keine Wiederholungen auf. Daneben gibt es die sogenannten kurzen Codes, welche sich alle 256 Zeichen wiederholen, sowie die sogenannten Preamble-Codes, welche aus 4096 Zeichen bestehen. Die langen Scrambling-Codes weisen die höchste Komplexität auf. Sie sind im UMTS-Standard mit Hilfe von Pseudo-Noise-Folgen definiert. Fig. 2 zeigt einen Spreizcodegenerator, wie er in UMTS für die Erzeugung von langen Scrambling-Codes im Downlink eingesetzt wird. Dieser Spreizcodegenerator ist in "3GPP: Spreading and modulation (FDD)", 3rd Generation Partnership Project TS 25.213 V4.2.0 (2001-12), in Kapitel 5.2.2, beschrieben.

Der Codegenerator umfasst zwei Schieberegister SR1 und SR2. Das Schieberegister SR1 weist eine feste Funktionsbeschaltung F1 auf, welche durch das Polynom $f_1(X) = 1 + x^7 + x^{18}$ definiert ist. Die feste Funktionsbeschaltung F2 des zweiten Schieberegisters SR2 ist durch das Polynom $f_2(x) = 1 + x^5 + x^7 + x^{10} + x^{18}$ bestimmt. Beide Polynome sind irreduzibel und vom Grad 18.

Die Funktionsbeschaltung F1 des ersten Schieberegisters SR1 ist durch Abgriffe an den Zellen 0 und 7 (die Schieberegisterzellen werden hier lediglich durch ihre Indizes angegeben) sowie ein XOR-Gatter 50 realisiert, welches die beiden Abgriffe Modulo-Zwei addiert. Analog ist die Funktionsbeschaltung F2 des zweiten Schieberegisters SR2 durch ein XOR-Gatter 51 realisiert, welches die Abgriffe der Schieberegisterzellen 0, 5, 7 und 10 entgegennimmt und Modulo-Zwei addiert.

Ein weiterer Modulo-Zwei-Addierer 52 addiert die Zelleninhalte der beiden Schieberegisterzellen mit jeweils dem Index 0. Am Ausgang des Modulo-Zwei-Addierers 52 wird der Realteil (I) des Scrambling-Codes ausgegeben.

Zur Berechnung des Imaginärteils (Q) des komplexen Scrambling-Codes wird ein fester Maskenabgriff durchgeführt. Bezüglich des ersten Schieberegisters SR1 wird dieser Maskenabgriff durch eine Modulo-Zwei-Addition der Inhalte der Schieberegisterzellen mit den Indizes 4, 6 und 15 mittels des Modulo-Zwei-Addierers 53 realisiert. Auf Seiten des zweiten Schieberegisters SR2 erfolgt ein Abgriff der Schieberegisterzellen mit den Indizes 5, 6, 8, 9, 10, 11, 12, 13, 14 und 15 sowie eine Modulo-Zwei-Addition der Zelleninhalte, welche von dem Modulo-Zwei-Addierer 54 vorgenommen wird. Die Ausgänge der beiden Modulo-Zwei-Addierer 53 und 54 werden von einem weiteren Modulo-Zwei-Addierer 55 addiert. Der Ausgang des Modulo-Zwei-Addierers 55 bildet den Imaginärteil (Q) der gesuchten komplexwertigen Scrambling-Codefolge.

Die Codeerzeugung erfolgt hier folgendermaßen:

Die Codesequenz des Scrambling-Codes mit der Nummer N wird mit $z_N$ bezeichnet. x bzw, y bezeichnen die Sequenzen, die von dem ersten Schieberegister SR1 bzw. von dem zweiten Schieberegister SR2 ausgegeben werden. $z_N(i)$ bezeichnet das i-te Symbol der Sequenz $z_N$, entsprechend bezeichnen x(i) und y(i) die i-ten Symbole der Sequenzen x und y.

Die Sequenz x wird mit folgenden Anfangswerten gebildet:

$$\mathtt{x(0) \; = \; 1; \; x(1) \; = \; x(2) \; = \; ... \; = \; x(17) \; = \; 0}$$

Die Sequenz y wird mit folgenden Anfangswerten gebildet:

$$\mathtt{y(0) \; = \; y(1) \; = \; ... \; = \; y(17) \; = \; 1}$$

Die Sequenz $z_N(i)$, i = 0, ..., $2^{18}$- 2, des Gold-Codes mit der Nummer N ist definiert durch:

$$z_N(i) = x((i + N) \bmod (2^{18} - 1)) + y(i) \bmod 2$$

Diese binäre Sequenz wird in eine duale Sequenz $Z_N$ umgesetzt:

$$Z_N(i) = \begin{cases} + 1 & \text{falls } z_N(i) = 0 \\ - 1 & \text{falls } z_N(i) = 1 \end{cases}$$

Darauf aufbauend wird der komplexe Scrambling Code $SC_N$ mit der Codenummer N gebildet:

$$SC_N(i) = Z_N(i) + j \cdot Z_N((i+131072) \bmod (2^{18} -1)),$$

wobei i = 0, 1, ..., 38399 ist und j die imaginäre Einheit bezeichnet.

Es wird darauf hingewiesen, dass die Definition der Sequenz $z_N(i)$ eine Verschiebung um N Bit ausgehend von dem durch die Anfangswerte definierten Anfangszustand des Schieberegisters SR1 verlangt. Mittels der Erfindung ist es möglich, rechnerisch den Inhalt des Schieberegisters SR1 zu bestimmen, der sich nach Durchführung von N Iterationen ergeben würden. Dieser um N Bit verschobenen Initialisierungszustand kann dann in die Registerzellen des Schieberegisters SR1 eingeschrieben werden. Ausgehend von diesem Initialisierungszustand erzeugt das Schieberegister SR1 dann die um N Bit verschobene Pseudo-Noise-Folge, welche in Verbindung mit der vom Schieberegister SR2 erzeugten Pseudo-Noise-Folge dann die Spreizfolge $SC_N$ ergibt.

Ein anderer Anwendungsfall besteht darin, für beide Schieberegister SR1 und SR2 Initialisierungszustände zu berechnen, welche gegenüber den jeweiligen Anfangszuständen um jeweils N Bit verschoben sind. N stellt in diesem Fall einen gewünschten Zeitversatz des Code-Generators zum Timing einer Sende- bzw. Empfangstätigkeit dar.

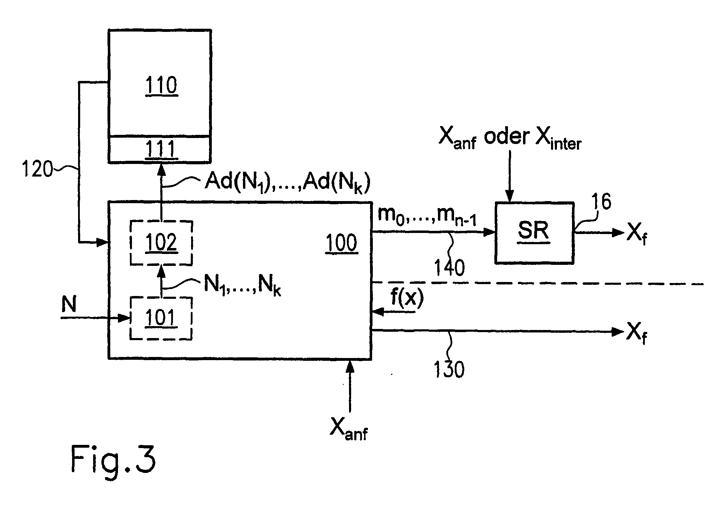

Fig. 3 zeigt eine schematische Darstellung von zwei kombiniert dargestellten Ausführungsbeispielen einer erfindungsgemäßen Vorrichtung, mittels welcher ausgehend von einem Anfangszustand ein solcher um N Bitverschiebungen bzw. Schieberegisteroperationen iterierter Schieberegisterzustand berechnet werden kann. Gemeinsam ist den beiden Ausführungsbeispielen, dass die jeweiligen Vorrichtungen einen Prozessor 100 sowie einen Speicher 110, vorzugsweise einen ROM-Speicher, umfassen. Während das erste Ausführungsbeispiel, welches im rechten Bildteil oberhalb der gestrichelten Linie dargestellt ist, zusätzlich ein rückgekoppeltes Schieberegister SR umfasst, ist ein solches beim zweiten Ausführungsbeispiel, welches unterhalb der gestrichelten Linie dargestellt ist, nicht vorhanden.

Bei beiden Ausführungsbeispielen wird die Berechnung der Abgriffmaske, welche die gewünschte N-fache Iteration einer Schieberegisteranordnung mit dem charakteristischen Polynom f(x) realisiert, mittels des Prozessors 100 im Zusammenwirken mit dem Speicher 110 durchgeführt. Zu diesem Zweck wird dem Prozessor 100 die Zahl N eingegeben. Dem Prozessor ist ferner das charakteristische Polynom f(x) bekannt.

Der Prozessor 100 führt nun eine Zerlegung der Zahl N in eine Summe N = $N_1$ + ... + $N_k$ durch. Die durch den Kasten 101 angedeutete Zerlegung beruht auf einer vorgegebenen Zerlegungsbasis, welche die möglichen Werte $N_i$, i = 1, 2, ..., enthält.

Die für die Zahl N gefundene Zerlegung $N_1$, ..., $N_k$ wird einem Adressengenerator 102 mitgeteilt. Der Adressengenerator 102 wird üblicherweise ebenfalls durch Programmabarbeitung mittels des Prozessors 100 realisiert. Der Adressengenerator 102 erzeugt für jeden Summanden $N_1$, ..., $N_k$ der gefundenen Zerlegung von N eine Adresse Ad($N_1$), ..., Ad($N_k$), welche einen Adress-Decoder 111 des Speichers 110 ansteuert.

In dem Speicher 110 sind für sämtliche Zahlen $N_i$ der Zerlegungsbasis die zugehörigen Abgriffmasken in Form der entsprechenden Koeffizientensätze $m_0$, $m_1$, ..., $m_{n-1}$ abgespeichert. Die Koeffizientensätze für die Zahlen $N_1$, ..., $N_k$ der aktuell gefundenen Zerlegung werden über die Datenleitung 120 dem Prozessor 100 mitgeteilt. Mit anderen Worten liest der Prozessor 100 aus dem Speicher 110 die charakteristischen Abgriffmasken für die Zerlegung $N_1$, ..., $N_k$ aus.

Der Berechnung der Abgriffmaske m(x) für die Verschiebung N liegt die folgende Eigenschaft der Polynom-Division zugrunde:

$$x^{M_1 + M_2} \; / \; f(x) \; = \; x^{M_1} \; / \; f(x) \cdot x^{M_2} \; / \; f(x)$$

wobei $M_1$ und $M_2$ beliebige ganze Zahlen sind. Das Ergebnis ist ein Polynom vom Grad nicht größer als $2(n-1)$.

Infolgedessen wird die gesuchte Abgriffmaske mit dem charakteristischen Polynom $m(x)$ durch die nachfolgende Beziehung erhalten:

$$m(x) \; = \; \prod_{i=1}^{k} m_i(x) \bmod f \, , \quad \text{wobei} \quad m_i(x) = \left[ x^{N_i} \right] \bmod f$$

ist.

Die Addition von Verschiebungen wird damit zurückgeführt auf die Multiplikation von Abgriffmasken modulo f. Wenn im folgenden von "Multilikation von Abgriffmasken" gesprochen wird, ist die Multiplikation der charakteristischen Polynome der Abgriffmasken gemeint.

Diese Polynom-Multiplikation wird von dem Prozessor 100 durchgeführt. Als Ergebnis wird die gesuchte Abgriffmaske für die N-fache Verschiebung in Form des Koeffizientensatzes $m_0$, $m_1$, ..., $m_{n-1}$ erhalten.

Bei dem ersten Ausführungsbeispiel wird der Koeffizienten-Satz $m_0$, $m_1$, ..., $m_{n-1}$ über eine Steuerverbindung 140 dem Schieberegister SR zugeleitet. Er wird zur Ansteuerung des Schieberegisters SR verwendet, welches gemäß dem in Fig. 1 dargestellten Schieberegister mit einer steuerbaren Abgriffbeschaltung A realisiert ist. Das Schieberegister SR ist mit einem Anfangszustand $X_{anf}$ - beispielsweise den für das Schieberegister SR1 definierten Anfangswerten - vorbelegt. Am Ausgang 16 der Abgriffbeschaltung A stehen nach n Schieberegisteroperationen die gewünschten Werte des N-fach iterierten Endzustands $X_f$ bereit (diese bilden dann z.B. den Initialisierungszustand des Schieberegisters SR1; in diesem Fall weist das Schieberegister SR die durch das charakteristische Polynom $f_1(x) = + x^7 + x^{18}$ bestimmte Funktionsbeschaltung auf).

Bei dem zweiten Ausführungsbeispiel wird die beim ersten Ausführungsbeispiel in dem Schieberegister SR durchgeführte Erzeugung der Werte des Endzustands $X_f$ der Schieberegisteranordnung durch n Schieberegisteroperationen in dem Prozessor 100 ausgeführt. Die Werte des Endzustands $X_f$ werden an einem Ausgang 130 des Prozessors 100 bereitgestellt. In diesem Fall muss dem Prozessor 100 der Anfangszustand $X_{anf}$ der Schieberegisteranordnung mitgeteilt werden.

Es wird darauf hingewiesen, dass die der Abgriffmaske (Koeffizienten-Satz $m_0$, $m_1$, ..., $m_{n-1}$) zugeordnete Verschiebung nicht notwendigerweise die Gesamtverschiebung N ausmachen muss. Es ist auch möglich, die Gesamtverschiebung N in zwei (oder mehr) Teilverschiebungen zu unterteilen, z.B. N = (N-N') + N', wobei N' eine ganze Zahl kleiner als N ist.

In diesem Fall kann die erste Teilverschiebung N-N' direkt durchgeführt werden, z.B. indem beim ersten Ausführungsbeispiel von dem Schieberegister SR bzw. beim zweiten Ausführungsbeispiel vom Prozessor 100 ausgehend vom Anfangszustand $X_{anf}$ eine Anzahl von N-N' Schieberegisteroperationen durchgeführt werden, um den durch die erste Teilverschiebung N-N' definierten Zwischenzustand $X_{inter}$ zu generieren. Eine andere Möglichkeit besteht darin, dass der durch N-N' Schieberegisteroperationen bewirkte Zwischenzustand $X_{inter}$ vorab in einem Speicher, z.B. dem Speicher 110, abgespeichert ist und bei Bedarf ausgelesen wird.

Die zu berechnende Abgriffmaske muss nur noch die restlichen N' Verschiebungen (d.h. die zweite Teilverschiebung) berücksichtigen. Die Formel lautet

$$m(x) \; = \; \left[ x^{N'} \right] \bmod f \, .$$

Im zweiten Schritt wird dann mit dieser modifizierten Abgriffmaske ausgehend von dem Zwischenzustand $X_{inter}$ durch Ausführung von n Schieberegisteroperationen der N-fach iterierte Endzustand $X_f$ der Schieberegisteranordnung berechnet.

Ein wichtiger Freiheitsgrad des beschriebenen Systems besteht in der Wahl der verwendeten Zerlegungsbasis. Dieser Freiheitsgrad ermöglicht einen den jeweiligen Interessen angepassten Kompromiss zwischen Rechenaufwand und Speicherplatzbedarf. Je größer die Anzahl der (abgespeicherten) Abgriffmasken der Zerlegungsbasis, desto geringer ist in der Regel die Anzahl k der für eine konkrete Verschiebung N benötigten Masken. Die einzige Bedingung für eine Zerlegungsbasis besteht darin, dass man durch Summenbildung jede gewünschte Verschiebung N erreichen kann.

Eine erste Zerlegungsbasis wird beispielsweise durch die Werte $2^0$, $2^1$, $2^2$, ... , d.h. $N_1 = 2^{i-1}$ , i = 1, 2, ... , gegeben. Welche dieser Abgriffmasken im oben beschriebenen Verfahren miteinander zu multiplizieren sind, ergibt sich dann aus der binären Darstellung der gewünschten Verschiebung N. Die Anzahl k der notwendigen Maskenmultiplikationen ist in diesem Fall durch die Länge der Verschiebung in Darstellung als Binärzahl gegeben. Infolgedessen hängt k logarithmisch von N ab.

Durch die gruppenweise Zusammenfassung von Bits der Binärdarstellung von N lassen sich weitere Zerlegungsbasen definieren. Dies soll anhand einiger Beispiele verdeutlicht werden.

In UMTS liegen die betrachteten Verschiebungen zur Erzeugung des Initialisierungszustandes für einen Scrambing-Code im Bereich von 0 bis 65535 = $2^{16}$-1. Insofern lässt sich jede Verschiebung N durch eine Binärzahl mit 16 Stellen darstellen:

$$N = b_{15}\ b_{14}\ b_{13}\ ...\ b_1\ b_0$$

Dabei können $b_i$ , i = 0, ..., 15 jeweils den Wert 0 oder 1 annehmen.

Mit L wird die Anzahl der Bits bezeichnet, die in einer Gruppe zusammengefasst werden. Beispielsweise ergeben sich für

L = 4 vier Gruppen, welche in der Tabelle 1 dargestellt sind.

Tabelle 1

| Gruppe 1 | $b_{15}$ | $b_{14}$ | $b_{13}$ | $b_{12}$ | 0 | 0 | 0 | 0 | 0 | 0 | 0 | 0 | 0 | 0 | 0 | 0 |
|---|---|---|---|---|---|---|---|---|---|---|---|---|---|---|---|---|
| Gruppe 2 | 0 | 0 | 0 | 0 | $b_{11}$ | $b_{10}$ | $b_9$ | $b_8$ | 0 | 0 | 0 | 0 | 0 | 0 | 0 | 0 |
| Gruppe 3 | 0 | 0 | 0 | 0 | 0 | 0 | 0 | 0 | $b_7$ | $b_6$ | $b_5$ | $b_4$ | 0 | 0 | 0 | 0 |
| Gruppe 4 | 0 | 0 | 0 | 0 | 0 | 0 | 0 | 0 | 0 | 0 | 0 | 0 | $b_3$ | $b_2$ | $b_1$ | $b_0$ |

In jeder Gruppe gibt es somit 16 verschiedene Zahlen, d.h. man hat insgesamt 4·16 = 64 Abgriffmasken zu speichern, um für jede Verschiebung N zwischen 0 und 65535 durch Polynom-Multiplikation die zugehörige Abgriffmaske berechnen zu können. Maximal müssen 3 Polynom-Multiplikationen (von vier Polynomen) durchgeführt werden. Die Gesamtanzahl der Schieberegisteropertionen ist die im zweiten Schritt durchzuführenden

n = 18 Schieberegisteroperationen.

In der Tabelle 2 sind weitere Gruppierungsmöglichkeiten der binären Zahlendarstellung für das Beispiel $0 \leq N \leq 65535$ angegeben. Jede Gruppierungsmöglichkeit definiert eine Zerlegungsbasis. Das vorstehend diskutierte Beispiel einer Zerlegungsbasis ist unter der Nr. 1 in der ersten Spalte der Tabelle 2 angegeben

Tabelle 2

| Nr. | Direkte Schieberegisteroperationen N-N' | Gruppenlänge L | Gesamtanzahl der Schieberegisteroperationen | Anzahl der Maskenmultiplikationen | Anzahl der gespeicherten Masken |
|---|---|---|---|---|---|
| 1 | 0 | 4 | 18 | 3 | 4-16=64 |
| 2 | 0 | 8 | 18 | 1 | 2-256=512 |
| 3 | 0-15 | 4 | ≤ 15 + 18 | 2 | 3·16=48 |
| 4 | 0-15 | 6 | ≤ 15 + 18 | 1 | 2·64=128 |
| 5 | 0-15 | 3 | ≤ 15 + 18 | 3 | 4·8=32 |

(fortgesetzt)

| Nr. | Direkte Schieberegisteroperationen N-N' | Gruppen-länge L | Gesamtanzahl der Schieberegisteroperationen | Anzahl der Maskenmultiplikationen | Anzahl der gespeicherten Masken |
|---|---|---|---|---|---|
| 6 | 0-15 | 2 | ≤ 15 + 18 | 5 | 6·4=24 |
| 7 | 0-15 | 1 | ≤ 15 + 18 | 11 | 12·1=12 |

In der zweiten Spalte der Tabelle 2 sind ggf. durchzuführende direkte Schieberegisteroperationen (zur Erreichung des Zwischenzustands $X_{inter}$) angegeben, in der dritten Spalte ist die Gruppenlänge L angegeben, in der vierten Spalte ist die Gesamtanzahl von Schieberegisteroperationen angegeben, in der fünften Spalte ist die Anzahl der Masken- bzw. Polynom-Multiplikationen angegeben und die sechste Spalte führt die Anzahl der in dem Speicher 110 abzuspeichernden Abgriffmasken (dargestellt durch die den Abgriffmasken zugeordneten Koeffizientensätze) auf.

Wird eine Gruppenlänge von L = 2 gewählt (Zerlegungsbasis-Nr. 2), ist lediglich eine Maskenmultiplikation auszuführen.

Allerdings wird ein relativ hoher Speicherplatzbedarf für die 512 zu speichernden Abgriffmasken der Zerlegungsbasis benötigt.

Das Beispiel Nr. 3 orientiert sich hinsichtlich der Gruppenlänge L am Bsp. Nr. 1, wobei jedoch Verschiebungen bis maximal N-N' = 15, d.h. die Verschiebungen der (niederwertigsten) 4. Gruppe, nicht in die Berechnung der Abgriffmaske eingehen, sondern in anderer Weise, z.B. als direkte Schieberegisteroperationen, realisiert werden. Insofern fallen im Vergleich zum Beispiel 1 eine Anzahl von 16 abgespeicherten Abgriffmasken weg, und es müssen statt 3 nur zwei Maskenmultiplikationen durchgeführt werden. Die dabei berechnete Abgriffmaske m(x) entspricht einer Verschiebung von N', wobei 0 ≤ N-N' ≤ 15.

Das Beispiel 3, bei welchem die Gesamtverschiebung "hybrid" durch beispielsweise direkte Schieberegisteroperationen und Polynom-Multiplikationen erzeugt wird, ist in der Regel günstiger als das Beispiel 1, da 15 Schieberegisteroperationen (noch) aufwandsgünstiger als eine Polynom-Multiplikation in Soft- oder Hardware realisierbar sind.

Die Beispiele 4 bis 7 stellen Abwandlungen der bisher erläuterten Beispiele dar und sind insbesondere auf Anwendungsfälle mit begrenzten Speicherressourcen gerichtet. Die 4 niederwertigsten Bit $b_0$, $b_1$, $b_2$, $b_3$ der 4. Gruppe werden wie im Beispiel 3 durch direkte Schieberegisteroperationen realisiert, und L gibt die Gruppenlänge der restlichen Gruppen (welche die restlichen 12 Bits überdecken) an.

Das Beispiel 7 mit L = 1 entspricht der binären Zerlegungsbasis unter Nichtberücksichtigung der 4 niederwertigsten Bit der 4. Gruppe. Es müssen lediglich 12 Abgriffmasken gespeichert sein (nämlich eine für jedes Bit), um sämtliche Verschiebungen 0 ≤ N ≤ 65535 (hybrid) bewältigen zu können. Allerdings sind 11 Polynom-Multiplikationen erforderlich, um bei Berücksichtigung von 0 ≤ N-N' ≤ 15 direkten Schieberegisteroperationen die Abgriffmaske für die N'-fache Iteration der Schieberegisteranordnung zu berechnen.

Der Aufwand für eine Maskenmultiplikation ist abhängig von der Implementierung, welche in Hardware (d.h. in Form einer festverdrahteten Schaltung) oder in Software erfolgen kann. In Software kann eine Maskenmultiplikation für Abgriffmasken der Länge n durch etwa 5·n elementare Bitoperationen realisiert werden. Im obigen Beispiel (n = 18) wären also etwa 90 elementare Bitoperationen für eine Maskenmultiplikation anzusetzen.

In der Tabelle 3 werden die Beispiele 4 und 5 mit den im Stand der Technik bekannten Verfahren (Ausführen von Schieberegisteroperationen bis zur gewünschten Verschiebung N und Lesen von Belegungsmuster für die Initialisierung des Schieberegisters in Abhängigkeit von N) verglichen.

Tabelle 3

| Verfahren | Anzahl der Schieberegister-bzw. Bitoperationen | Größe des verwendeten Speichers in Bit |
|---|---|---|
| Ausführen von N Schieberegisteroperationen | max. 65535 | 0 |
| Lesen des Initialisierungszustandes aus einer Tabelle | 0 | 65535 |
| Bsp.-Nr. 4 | 33 Schieberegisteroperationen + 90 Bitoperationen | 128·18 = 2304 |

(fortgesetzt)

| Verfahren | Anzahl der Schieberegister-bzw. Bitoperationen | Größe des verwendeten Speichers in Bit |
|---|---|---|
| Bsp.-Nr. 5 | 33 Schieberegisteroperationen + 270 Bitoperationen | 32·18 = 576 |

Es wird deutlich, dass durch die Variabilität des erfindungsgemäßen Verfahrens in Hinblick auf die Wahl der Zerlegungsbasis und der Berechnung einer "partiellen" Abgriffmaske für eine N'-fache Iteration mit N' < N die Möglichkeit gegeben ist, die Größe des verwendeten Speichers 110, aber auch die Anzahl der notwendigen Rechenoperationen, gering zu halten.

Man beachte, dass in allen Fällen nach der Berechnung der Abgriffmaske noch die im zweiten Schritt auszuführenden n = 18 Schieberegisteroperationen durchzuführen sind.

Neben den vorstehend beschriebenen, auf der binären Zahlendarstellung fußenden Zerlegungsbasen sind weitere Zerlegungsbasen möglich. Wenn vergleichsweise weniger Multiplikationen durchgeführt werden sollen, um den Rechenaufwand zu verringern, bzw. wenn ein größeres Speicherplatzangebot vorhanden ist, kann z.B. eine Zerlegungsbasis mit den Werten

1, 2, 3 8, 16, 24, 64, 128, 192, ...,

d.h. $2^{i-1}$, $2 \cdot 2^{i-1}$, $3 \cdot 2^{i-1}$, $2^{i+2}$ $2 \cdot 2^{i+2}$, $3 \cdot 2^{i+2}$, ...,

gewählt werden. Die Anzahl der Maskenmultiplikationen verringert sich im Vergleich zu der Binärbasis auf etwa die Hälfte, die Größe des notwendigen Speichers 110 wird verdreifacht.

**Patentansprüche**

1. Verfahren zur Bestimmung eines n Bit umfassenden, N-fach iterierten Endzustands ($X_f$) einer Schieberegisteranordnung aus einem gegebenen, n Bit umfassenden Anfangszustand ($X_{anf}$) der Schieberegisteranordnung, wobei die Iterationsvorschrift für die Schieberegisteranordnung durch das charakteristische Polynom

$$f(x) = 1 + c_1 \cdot x + c_2 \cdot x^2 + \ldots + c_{n-1} \cdot x^{n-1} + x^n$$

mit $c_1$ $c_2$, ... $C_{n-1} \in \{0; 1\}$ gegeben ist,
wobei eine einer Anzahl N' von Schieberegisteroperationen entsprechende Zustandsänderung der Schieberegisteranordnung,
mit 0 < N' ≤ N, durch folgende Schritte berechnet wird:

    a) Bestimmen einer für N' Schieberegisteroperationen charakteristischen Abgriffmaske; und
    b) Durchführen von n Schieberegisteroperationen, wodurch unter Verwendung der Abgriffmaske pro Schieberegisteroperation ein Bit der n Bits eines N'-fach iterierten Zustands der Schieberegisteranordnung erhalten wird,

wobei der Schritt a) die Schritte umfasst:

    - Zerlegen von N' gemäß $N' = \sum_{j=1}^{k'} N_{i(j)}$ ; und

    - Bestimmen der für N' Schieberegisteroperationen charakteristischen Abgriffmaske durch Polynom-Multiplikation von k' Abgriffmasken $m_{i(j)}(x)$, mit j = 1, .., k', aus einer begrenzten Zahl vorab berechneter Abgriffmasken $m_i(x)$, wobei jede der k' Abgriffmasken $m_{i(j)}(x)$ für die jeweiligen $N_{i(j)}$ Schieberegisteroperationen charakteristisch ist.

2. Verfahren nach Anspruch 1,
wobei
die Abgriffmaske durch das Polynom

$$m(x) = \left[x^{N'}\right] \bmod f$$

der Form

$$m(x) = m_0 + m_1 \cdot x + m_2 \cdot x^2 + \ldots + m_{n-1} \cdot x^{n-1}$$

mit dem Koeffizientensatz $m_0$, $m_1$, $m_{n-1} \in \{0; 1\}$ definiert ist, wobei

- genau dann ein Abgriff der i-ten Zelle der Schieberegisteranordnung vorgenommen wird, wenn $m_i = 1$ gilt, und
- bei jeder Schieberegisteroperation eine Modulo-Zwei-Addition der abgegriffenen Bits durchgeführt wird.

**3.** Verfahren nach Anspruch 2,
wobei
der Schritt a) die Schritte umfasst:

a1) Zerlegen von N gemäß $N = \sum_{i=1}^{k} N_i$ in eine Summe aus k ganzen Zahlen $N_i$, wobei $k > 1$;

a2) sofern $N' = N$, Bestimmen der für N Schieberegisteroperationen charakteristischen Abgriffmaske aus den für die $N_i$,
$i = 1, .., k$, Schieberegisteroperationen charakteristischen Abgriffmasken nach

$$m(x) = \prod_{i=1}^{k} m_i(x) \bmod f,$$

wobei $m_i(x) = [x^{N_i}] \bmod f$ ist, und/oder
a2') sofern $N' < N$,

- Wählen derjenigen $N_{i(j)}$, für die $N' = \sum_{j=1}^{k'} N_{i(j)}$ gilt, wobei $k' < k$; und

- Bestimmen der für N' Schieberegisteroperationen charakteristischen Abgriffmaske aus den für die $N_{i(j)}$, $j = 1, .., k'$ Schieberegisteroperationen charakteristischen Abgriffmasken nach

$$m(x) = \prod_{j=1}^{k'} m_{i(j)}(x) \bmod f, \quad \text{wobei} \quad m_{i(j)}(x) = \left[x^{N_{i(j)}}\right] \bmod f$$

ist.

**4.** Verfahren nach Anspruch 3,
wobei
der Zerlegung eine Zerlegungsbasis zugrunde liegt, bei der $N_i$ die Werte $2^{i-1}$, $i = 1, 2, \ldots$ , annehmen kann.

**5.** Verfahren nach Anspruch 3,
wobei
der Zerlegung eine Zerlegungsbasis zugrunde liegt, bei der $N_i$ die Werte $2^{i-1}$, $2 \cdot 2^{i-1}$, $3 \cdot 2^{i-1}$, $2^{i+2}$, $2 \cdot 2^{i+2}$, $3 \cdot 2^{i+2}$,..., $i =$

1, 2, ..., annehmen kann.

6. Verfahren nach Anspruch 3,
wobei
N als Binärzahl dargestellt und das zugehörige Bitwort in Gruppen benachbarter Bits zerlegt wird; und
dass der Zerlegung von N eine Zerlegungsbasis zugrunde liegt, bei der für jede Gruppe $N_i$ die Werte annehmen kann, die durch die Binärzahlen gegeben sind, in welchen alle Bits außer die Bits der betrachteten Gruppe 0 sind.

7. Verfahren nach einem der Ansprüche 3 bis 6,
wobei
Koeffizientensätze der für die möglichen Werte von $N_{i(j)}$ benötigten Polynome $m_{i(j)}(x)$ in einem Speicher (110) abgelegt sind, mit dem Schritt:

Auslesen der Koeffizientensätze der Polynome $m_{i(j)}(x)$ zu der Zerlegung $N' = \sum_{j=1}^{k'} N_{i(j)}$ aus dem Speicher

(110).

8. Verfahren nach einem der vorhergehenden Ansprüche,
wobei
dass der n Bit umfassende, N-fach iterierte Endzustand als Initialisierungszustand für die Erzeugung einer um N Bit verschobenen Pseudo-Noise-Folge verwendet wird.

9. verfahren nach einem der vorhergehenden Ansprüche,
mit dem
nach Schritt b) auszuführenden Schritt:

c) Einschreiben des n Bit umfassenden, N-fach iterierten Endzustands als Initialisierungszustand in ein n Schieberegisterzellen ($R_1$, $R_2$, ... , $R_n$) umfassendes Schieberegister mit einer durch das charakteristische Polynom f(x) definierten äußeren Funktionsbeschaltung.

10. Verfahren nach Anspruch 9,
wobei
das Schieberegister ferner mit einer durch die Abgriffmaske steuerbaren Abgriffbeschaltung versehen ist, und
dass mittels dieser Abgriffmaske bei Ausführung des Schrittes b) der n Bit umfassenden, N'-fach iterierten Zustand erzeugt wird.

11. Verfahren nach einem der vorhergehenden Ansprüche,
wobei
das Verfahren in CDMA-Übertragungssystemen, insbesondere in CDMA-Übertragungssystemen mit den Übertragungsstandards UMTS oder IS-95, zur Erzeugung einer Spreizfolge mit einem Offset von N Bit, verwendet wird.

12. Verfahren nach Anspruch 11,
wobei
das Verfahren zur Erzeugung der im UMTS-Standard definierten Scrambling-Codes eingesetzt wird.

13. Verfahren nach einem der Ansprüche 11 und 12,
wobei
durch eine gegebene Code-Nummer der Offset einer Spreizfolge festgelegt wird, wobei der n Bit umfassende, N-fach iterierte Endzustand als Initialisierungszustand für die Erzeugung der der Code-Nummer N zugeordneten Spreizfolge verwendet wird.

14. Vorrichtung zur Bestimmung eines n Bit umfassenden, N-fach iterierten Endzustands einer Schieberegisteranordnung aus einem gegebenen, n Bit umfassenden Anfangszustand der Schieberegisteranordnung, wobei die Iterationsvorschrift für die Schieberegisteranordnung durch das charakteristische Polynom

$$f(x) = 1 + c_1 \cdot x + c_2 \cdot x^2 + \ldots + c_{n-1} \cdot x^{n-1} + x^n$$

mit $c_1, c_2, \ldots C_{n-1} \in \{0; 1\}$ gegeben ist, mit

- einem Mittel (100, 110) zum Bestimmen einer für N' Schieberegisteroperationen dieser Schieberegisteranordnung charakteristischen Abgriffmaske, wobei N' eine ganze Zahl mit $0 < N' \leq N$ ist; und
- einem Mittel (100; SR) zum Durchführen von n Schieberegisteroperationen, wodurch unter Verwendung der Abgriffmaske pro Schieberegisteroperation ein Bit der n Bits eines N'-fach iterierten Zustands der Schieberegisteranordnung erhalten wird,

wobei das Mittel (101) zum Bestimmen einer für N' Schieberegisteroperationen charakteristischen Abgriffmaske umfasst:

- ein Mittel zum Berechnen einer Zerlegung von N' gemäß

$$N' = \sum_{j=1}^{k'} N_{i(j)} \quad \text{und}$$

- ein Mittel zum Bestimmen der für N' Schieberegisteroperationen charakteristischen Abgriffmaske durch Polynom-Multiplikation von k' Abgriffmasken $m_{i(j)}(x)$, mit $j = 1, .., k'$, aus einer begrenzten Zahl vorab berechneter Abgriffmasken $m_{i(x)}$, wobei jede der k' Abgriffmasken $m_{i(j)}(x)$ für die jeweiligen $N_{i(j)}$ Schieberegisteroperationen charakteristisch ist.

15. Vorrichtung nach Anspruch 14,
wobei dass die Abgriffmaske durch das Polynom

$$m(x) = \left[x^{N'}\right] \bmod f$$

der Form

$$m(x) = m_0 + m_1 \cdot x + m_2 \cdot x^2 + \ldots + m_{n-1} \cdot x^{n-1}$$

mit dem Koeffizientensatz $m_0, m_1, \ldots m_{n-1} \in \{0; 1\}$ definiert ist, wobei

- genau dann ein Abgriff der i-ten Zelle der Schieberegisteranordnung vorgenommen wird, wenn $m_i = 1$ gilt, und
- bei jeder Schieberegisteroperation eine Modulo-Zwei-Addition der abgegriffenen Bits durchgeführt wird.

16. Vorrichtung nach Anspruch 15,
mit einem
Speicher (110), in welchem die Koeffizientensätze für eine Mehrzahl von für $N_i$ Schieberegisteroperationen charakteristischen Abgriffmasken zu den charakteristischen Polynomen $m_i(x)$ abgelegt sind, wobei $m_i(x) = [x^{N_i}] \bmod f$ ist

17. Vorrichtung nach Anspruch 16,
wobei
das Mittel (101) zum Bestimmen einer für N' Schieberegisteroperationen charakteristischen Abgriffmaske umfasst:

- ein Mittel zum Berechnen einer Zerlegung von N in eine k Summe aus k ganzen Zahlen $N = \sum_{i=1}^{k} N_i,$

wobei k > 1, und

- ein Mittel (102) zum Erzeugen von Adressen zum Lesen der Koeffizientensätze zu den charakteristischen

Polynomen $m_{i(j)}(x)$ der Zerlegung $\displaystyle N' = \sum_{j=1}^{k'} N_{i(j)}$ , wobei k' < k sofern N' < N.

**18.** Vorrichtung nach einem der Ansprüche 14 bis 17,
wobei

das Mittel zum Bestimmen einer für N' Schieberegisteroperationen der Schieberegisteranordnung charakteristischen Abgriffmaske und das Mittel zum Durchführen von n Schieberegisteroperationen unter Verwendung der Abgriffmaske in Form eines Prozessors (100) realisiert sind.

**19.** Vorrichtung nach einem der Ansprüche 14 bis 17,
wobei

das Mittel zum Bestimmen einer für N' Schieberegisteroperationen der Schieberegisteranordnung charakteristischen Abgriffmaske in Form eines Prozessors (100) realisiert ist, und
dass das Mittel zum Durchführen von n Schieberegisteroperationen unter Verwendung der Abgriffmaske in Form eines n Schieberegisterzellen ($R_1$, $R_2$, ..., $R_n$) umfassenden Schieberegisters (SR) mit einer durch das charakteristische Polynom f(x) definierten äußeren Funktionsbeschaltung (F; F1) und einer durch die berechnete Abgriffmaske steuerbaren Abgriffbeschaltung (A) realisiert ist.

**20.** Vorrichtung nach einem der Ansprüche 16 bis 19,
mit einem weiteren

n Schieberegisterzellen ($R_1$, $R_2$, ..., $R_n$) umfassendes Schieberegister (SR1) mit einer durch das charakteristische Polynom f(x) definierten äußeren Funktionsbeschaltung (F1), in welches der n Bit umfassende Endzustand der Schieberegisteranordnung als Initialisierungszustand eingeschrieben wird.

**21.** Verwendung einer Vorrichtung nach einem der Ansprüche 14 bis 20 zur Erzeugung einer Spreizfolge mit einem Offset von N Bit in einem CDMA-Übertragungssystem, insbesondere in einem CDMA-Übertragungssystem entsprechend einem der Übertragungsstandards UMTS oder IS-95.

**22.** Verwendung nach Anspruch 21,
wobei

durch eines gegebene Code-Nummer N der Offset einer Spreizfolge festgelegt wird, wobei der n Bit umfassende, N-fach iterierte Endzustand als Initialisierungszustand für die Erzeugung der der Code-Nummer N zugeordneten Spreizfolge eingesetzt wird.

**Claims**

**1.** Method for determining a final state ($X_f$), comprising n bits and iterated N times, for a shift register arrangement from a given initial state ($X_{anf}$), comprising n bits, for the shift register arrangement, the iteration rule for the shift register arrangement being given by the characteristic polynomial

$$f(x) \;=\; 1 \;+\; c_1 \;\cdot\; x \;+\; c_2 \;\cdot\; x^2 \;+\; \ldots \;+\; c_{n-1} \;\cdot\; x^{n-1} \;+\; x^n$$

with $c_1$, $C_2$, ... $C_{n-1}$ E {0; 1},
where a shift register arrangement state change which corresponds to a number N' of shift register operations, where 0 < N' ≤ N, is calculated by the following steps:

a) a tap mask which is characteristic of N' shift register operations is determined; and
b) n shift register operations are performed, as a result of which the tap mask is used for each shift register operation to obtain one bit from n bits of an N'-fold iterated state of the shift register arrangement, where step a) comprises the following steps:

- N' is split on the basis of $N' = \sum_{j=1}^{k'} N_{i(j)}$; and

- the tap mask which is characteristic of N' shift register operations is determined by polynomial multiplication of k' tap masks $m_{i(j)}(x)$, where j = 1, .., k', from a limited number of previously calculated tap masks $m_i(x)$, each of the k' tap masks $m_{i(j)}(x)$ being characteristic of the respective $N_{i(j)}$ shift register operations.

**2.** Method according to Claim 1,
wherein the tap mask is defined by the polynomial

$$m(x) = \left[x^{N'}\right] \bmod f$$

in the form

$$m(x) = m_0 + m_1 \cdot x + m_2 \cdot x^2 + \ldots + m_{n-1} \cdot x^{n-1}$$

with the coefficient set $m_0, m_1, \ldots m_{n-1} \in \{0; 1\}$,
where

- the i-th cell of the shift register arrangement is tapped off if and only if $m_i = 1$, and
- for each shift register operation a modulo two addition is performed for the bits which have been tapped off.

**3.** Method according to Claim 2,
wherein
step a) comprises the following steps:

a1) N is split into a sum comprising k integer numbers $N_i$ in line with $N = \sum_{i=1}^{k} N_i$, where k > 1;

a2) if N' = N, the tap mask which is characteristic of N shift register operations is determined from the tap masks which are characteristic of the $N_i$,
i = 1, .., k, shift register operations on the basis of

$$m(x) = \prod_{i=1}^{k} m_i(x) \bmod f,$$

where $m_i(x) = [x^{N_i}] \bmod f$, and/or
a2') if N' < N,

- that $N_{i(j)}$ for which $N' = \sum_{j=1}^{k'} N_{(i)j}$, where k' < k, is chosen; and

- the tap mask which is characteristic of N' shift register operations is determined from the tap masks which are characteristic of the $N_{i(j)}$, j = 1, .., k', shift register operations on the basis of

$$m(x) = \prod_{j=1}^{k'} m_{i(j)}(x) \bmod f, \text{ where } m_{i(j)}(x) = \left[x^{N_{i(j)}}\right] \bmod f.$$

**4.** Method according to Claim 3,

wherein the split is based on a splitting basis in which $N_i$ can assume the values $2^{i-1}$, $i = 1, 2, ..., $ .

5. Method according to Claim 3,
   wherein the split is based on a splitting basis in which $N_i$ can assume the values $2^{i-1}$ $2 \cdot 2^{i-1}$ $3 \cdot 2^{i-1}$ $2^{i+2}$ $2 \cdot 2^{i+2}$ $3 \cdot 2^{i+2}$, ..., $i = 1, 2, ..., $ .

6. Method according to Claim 3,
   wherein N is represented as a binary number, and the associated bit word is split into groups of adjacent bits; and in that the split for N is based on a splitting basis in which, for each group, $N_i$ can assume the values which are given by the binary numbers in which all bits apart from the bits in the group in question are 0.

7. Method according to one of Claims 3 to 6,
   wherein coefficient sets of the polynomials $m_{i(j)}(x)$ required for the possible values of $N_{i(j)}$ are stored in a memory (110), having the following step:

   the coefficient sets of the polynomials $m_{i(j)}(x)$ for the split $N' = \sum_{j=1}^{k'} N_{i(j)}$ are read from the memory (110).

8. Method according to one of the preceding Claims,
   wherein the final state, comprising n bits and iterated N times, is used as initialization state for generating a pseudo noise sequence shifted through N bits.

9. Method according to one of preceding Claims,
   having the following step, which is to be performed after step b):

   c) the final state, comprising n bits and iterated N times, is written as initialization state into a shift register, comprising n shift register cells ($R_1$, $R_2$, ..., $R_n$), with external function circuitry which is defined by the characteristic polynomial f(x).

10. Method according to Claim 9,
    wherein the shift register is also provided with tap circuitry which can be controlled by the tap mask, and in that this tap mask is used, when step b) is performed, to produce the state comprising n bits and iterated N' times.

11. Method according to one of the preceding claims,
    wherein the method is used in CDMA transmission systems, particularly in CDMA transmission systems using the transmission standards UMTS or IS-95, in order to produce a spreading sequence with an offset of N bits.

12. Method according to Claim 11,
    wherein the method is used to produce the scrambling codes defined in the UMTS standard.

13. Method according to either of Claims 11 and 12,
    wherein a prescribed code number stipulates the offset for a spreading sequence, with the final state, comprising n bits and iterated N times, being used as initialization state for producing the spreading sequence associated with the code number N.

14. Device for determining a final state, comprising n bits and iterated N times, for a shift register arrangement from a given initial state, comprising n bits, for the shift register arrangement, the iteration rule for the shift register arrangement being given by the characteristic polynomial

$$f(x) = 1 + c_1 \cdot x + c_2 \cdot x^2 + ... + c_{n-1} \cdot x^{n-1} + x^n$$

with $c_1, c_2, ... c_{n-1} \in \{0; 1\}$, having

   - a means (100, 110) for determining a tap mask which is characteristic of N' shift register operations in this shift register arrangement, where N' is a whole number and $0 < N' = N$; and

- a means (100; SR) for performing n shift register operations, as a result of which the tap mask is used for each shift register operation to obtain one bit from the n bits of an N'-fold iterated state of the shift register arrangement,

where the means (101) for determining a tap mask which is characteristic of N' shift register operations comprises:

- a means for calculating a split for N' on the basis of $N' = \sum_{j=1}^{k'} N_{i(j)}$ and

- a means for determining the tap mask which is characteristic of N' shift register operations by polynomial multiplication of k' tap masks $m_{i(j)}(x)$, where j = 1, .., k', from a limited number of previously calculated tap masks $m_i(x)$, each of the k' tap masks $m_{i(j)}(x)$ being characteristic of the respective $N_{i(j)}$ shift register operations.

15. Device according to Claim 14,
    wherein the tap mask is defined by the polynomial

$$m(x) = \left[x^{N'}\right] \bmod f$$

in the form

$$m(x) = m_0 + m_1 \cdot x + m_2 \cdot x^2 + \ldots + m_{n-1} \cdot x^{n-1}$$

with the coefficient set $m_0, m_1, \ldots m_{n-1} \in \{0; 1\}$,
where

- the i-th cell of the shift register arrangement is tapped off if and only if $m_i = 1$, and
- for each shift register operation a modulo two addition is performed for the bits which have been tapped off.

16. Device according to Claim 15,
    having a memory (110), which stores the coefficient sets for a plurality of tap masks, which are characteristic of $N_i$ shift register operations, for the characteristic polynomials $m_i(x)$, where $m_i(x) = [x^{N_i}] \bmod f$.

17. Device according to Claim 16,
    wherein the means (101) for determining a tap mask which is characteristic of N' shift register operations comprises:

- a means for calculating a split for N into a sum k comprising k whole numbers $N = \sum_{i=1}^{k} N_i$, where k > 1, and

- a means (102) for producing addresses for reading the coefficient sets for the characteristic polynomials $m_{i(j)}$ (x) of the split $N' = \sum_{j=1}^{k'} N_{(i)j}$, where k' < k if N' < N.

18. Device according to one of Claims 14 to 17,
    wherein the means for determining a tap mask which is characteristic of N' shift register operations in the shift register arrangement and the means for performing n shift register operations using the tap mask are produced in form of a processor (100).

19. Device according to one of Claims 14 to 17,
    wherein the means for determining a tap mask which is characteristic of N' shift register operations in the shift register arrangement is produced in the form of a processor (100), and
    in that the means for performing n shift register operations using the tap mask is produced in the form of a shift register (SR), comprising n shift register cells ($R_1, R_2, \ldots, R_n$), with external function circuitry (F; F1) defined by the characteristic polynomial f(x) and tap circuitry (A) which can be controlled by the calculated tap mask.

**20.** Device according to one of Claims 16 to 19,
having a further shift register (SR1), comprising n shift register cells ($R_1$, $R_2$, ..., $R_n$), with external function circuitry (F1) defined by the characteristic polynomial f(x), into which the n-bit final state of the shift register arrangement is written as initialization state.

**21.** Use of a device according to one of Claims 14 to 20 for producing a spreading sequence with an offset of N bits in a CDMA transmission system, particularly in a CDMA transmission system in line with one of the transmission standards UMTS and IS-95.

**22.** Use according to Claim 21,
wherein a prescribed code number N stipulates the offset for a spreading sequence, where the final state, comprising n bits and iterated N times, is used as initialization state for producing the spreading sequence associated with the code number N.

**Revendications**

**1.** Procédé de détermination d'un état ($X_f$) final, comprenant n bits et itéré N fois d'un dispositif de registre à décalage à partir d'un état ($X_{anf}$) initial donné, comprenant n bits du dispositif de registre à décalage la prescription d'itération pour le dispositif de registre à décalage étant donnée par le polynôme caractéristique

$$f(x) = 1 + c_1 . x + c_2 . x^2 + \ldots + c_{n-1} . x^{n-1} + x^n$$

avec $C_1$, $C_2$, ... $C_{n-1}$ $\varepsilon$ {0 ; 1 }
dans lequel une variation d'état du dispositif de registre à décalage correspondant à un nombre N' d'opérations du registre à décalage avec 0 < N' ≤ N est calculée par les stades suivantes :

a) on détermine un masque de prélèvement caractéristique pour N' opérations du registre à décalage
b) on effectue n opérations de registre à décalage en obtenant, en utilisant le masque de prélèvement, par opération du registre à décalage, un bit des n bits d'un état itéré N'fois du dispositif de registre à décalage, dans lequel le stade a) comprend les stades :

- de décomposition de N' suivant $N' = \sum_{j=1}^{k'} N_{i(j)}$ ; et

- de détermination du masque de prélèvement caractéristique pour N' opérations du registre à décalage par multiplication de polynôme de k' masques de prélèvement $m_{i(j)}(x)$, avec j = 1, ..., k' à partir d'un nombre limité de masques $m_i(x)$ de prélèvement calculés à l'avance, chacun des k' masques $m_{i(j)}(x)$ de prélèvement étant caractéristique pour les $N_{i(j)}$ opérations de registre à décalage respectives.

**2.** Procédé suivant la revendication 1, dans lequel le masque de prélèvement est défini par le polynôme

$$m(x) = [x^{N'}] \bmod f$$

de la forme

$$m(x) = m_0 + m_1 . x + m_2 . x^2 + \ldots + m_{n-1} . x^{n-1}$$

ayant le jeu de coefficients $m_0$, $m_1$, ... $m_{n-1}$ $\varepsilon$ {0 ; 1},
dans lequel

- on effectue exactement alors un prélèvement de ième cellule du dispositif de registre à décalage lorsque $m_i$ = 1, et
- pour chaque opération de registre à décalage on effectue une addition modulo deux des bits prélevés.

3. Procédé suivant la revendication 2, dans lequel le stade a) comprend les stades :

a1) de décomposition de N suivant $N = \sum_{i=1}^{k} N_i$ en une somme de k nombres Ni entiers, avec k > 1 ;

a2) dans la mesure ou N' = N de détermination du masque de prélèvement caractéristique pour N opérations de registre à décalage à partir des masques de prélèvement caractéristiques pour les Ni, i = 1, ...., k opérations du registre à décalage suivant

$$m(x) = \prod_{i=1}^{k} m_i(x) \bmod f,$$

dans laquelle $m_i(x) - [x^{Ni}] \bmod f$, et/ou
a2') dans la mesure où N' < N,

- de choix du $N_{i(j)}$, pour lequel on a $N' = \sum_{j=1}^{k'} N_{i(j)}$ avec k' < k ; et

- de détermination du masque de prélèvement caractéristique pour N' opérations de registre à décalage à partir des masques de prélèvement caractéristiques pour les $N_{i(j)}$, j = 1, .... , k' opérations de registre à décalage suivant

$$m(x) = \prod_{j=1}^{k'} m_{i(j)}(x) \bmod f, \quad avec \quad m_{i(j)}(x) = \left[ x^{N_{i(j)}} \right] \bmod f$$

4. Procédé suivant la revendication 3, dans lequel une base de décomposition, pour laquelle $N_i$ peut prendre les valeurs $2^{i-1}$, i = 1, 2, ......, est à la base de la décomposition.

5. Procédé suivant la revendication 3, dans lequel une base de décomposition, pour laquelle Ni peut prendre les valeurs $2^{i-1}$, $2 \cdot 2^{i-1}$, $3 \cdot 2^{i-1}$, $2^{i+2}$, $2 \cdot 2^{i+2}$, $3 \cdot 2^{i+1}$, ..., i = 1, 2, ...... , est à la base de la décomposition.

6. Procédé suivant la revendication 3, dans lequel N représente un nombre binaire et le mot de bit associé est décomposé en des groupes de bits voisins ; et
en ce que une base de décomposition, pour laquelle chaque groupe $N_i$ peut prendre la valeur qui est donnée par les nombres binaires dans lesquels tous les bits sont 0 à l'exception des bits du groupe considéré, est à la base de la décomposition de N.

7. Procédé suivant l'une des revendications 3 à 6, dans lequel on mémorise dans une mémoire (110) des jeux de coefficients des polynômes $m_{i(j)}(x)$ nécessaires pour les valeurs possibles de $N_{i(j)}$, comprenant le stade :

de lecture des polynômes $m_{i(j)}(x)$ pour la décomposition $N' = \sum_{j=1}^{k'} N_{i(j)}$ dans la mémoire (110).

8. Procédé suivant l'une des revendications précédentes, l'état final comprenant n bits et itéré N fois est utilisé comme état d'initialisation pour la production d'une séquence de pseudo bruit décalé de N bits.

9. Procédé suivant l'une des revendications précédentes, comprenant le stade à effectuer après le stade b) :

c) d'inscription de l'état final comprenant n bits et itéré N fois comme état d'initialisation, dans un registre à décalage comprenant n cellules ($R_1$, $R_2$, ..... , $R_n$) de registre à décalage avec un câblage de fonction extérieur défini par le polynômes f(x) caractéristique.

10. Procédé suivant la revendication 9, dans lequel le registre à décalage est muni en outre d'un câblage de prélèvement pouvant être commandé par le masque de prélèvement, et en ce que au moyen de ce masque de prélèvement, on produit lors de l'exécution du stade b), l'état comprenant n bits et itéré N' fois.

11. Procédé suivant l'une des revendications précédentes, dans lequel le procédé est utilisé dans un système de transmission CDMA, notamment dans des systèmes de transmission CDMA ayant la norme de transmission UMPS ou IS-95, pour la production d'une séquence d'étalement ayant un décalage de N bits.

12. Procédé suivant la revendication 11, dans lequel on utilise le procédé pour la production des codes scrambling définis dans la norme UMTS.

13. Procédé suivant l'une des revendications 11 et 12, dans lequel on fixe par un numéro de code donné le décalage d'une séquence d'étalement, l'état final comprenant n bits et itéré N fois étant utilisé comme état d'initialisation pour la production de la séquence d'étalement associée au numéro de code N.

14. Dispositif de détermination d'un état final comprenant n bits et itéré N fois d'un dispositif de registre à décalage à partir d'un état initial donné comprenant n bits du dispositif de registre à décalage, la prescription d'itération étant donné pour le polynôme caractéristique

$$f(x) = 1 + c_1 \cdot x + c_2 \cdot x^2 + \dots + c_{n-1} \cdot x^{n-1} + x^n$$

avec $c_1$, $c_2$, ...... $c_n \, \varepsilon \, \{ 0 ; 1\}$, comprenant

- un moyen (100, 110) de détermination d'un masque de prélèvement caractéristique pour N' opérations de registre à décalage de ce dispositif de registre à décalage, N' étant un nombre entier avec $0 < N' \leq N$ ; et
- un moyen (100 ; SR) pour effectuer n opérations de registre à décalage en obtenant ainsi, en utilisant le masque de prélèvement, par opération de registre à décalage, n bits d'un état itéré N' fois du dispositif de registre à décalage,
dans lequel le moyen (101) de détermination d'un masque de prélèvement caractéristique pour N' opérations de registre à décalage, comprend :
- un moyen de calcul d'une décomposition de N' suivant

$$N' = \sum_{j=1}^{k'} N_{i(j)}$$

et
- un moyen de détermination du masque de prélèvement caractéristique pour N' opérations de registre à décalage par multiplication de polynôme de k' masques de décalage $m_{i(j)}(x)$, avec $j = 1, ..., k'$ à partir d'un nombre limité de masques $m_i(x)$ de prélèvement calculé à l'avance, chacun des k' masques $m_{i(j)}(x)$ de prélèvement étant caractéristique pour les $N_{i(j)}$ opérations respectives de registre à décalage.

15. Dispositif suivant la revendication 14, dans lequel le masque de prélèvement

$$m(x) = [x^{N'}] \bmod f$$

de la forme

$$m(x) = m_0 + m_1 \cdot x + m_2 \cdot x^2 + \ldots + m_{n-1} \cdot x^{n-1}$$

est défini par le jeu de coefficients $m_0$, $m_1$, ... $m_{n-1} \in \{0 ; 1\}$,
dans lequel

- on effectue exactement alors un prélèvement de la ième cellule du dispositif de registre à décalage lorsque $m_i = 1$, et
- pour chaque opération de registre à décalage, on effectue une addition modulo deux des bits prélevés.

**16.** Dispositif suivant la revendication 15, comprenant une mémoire (110) dans laquelle les jeux de coefficients pour une multiplicité de masques de prélèvement caractéristiques pour Ni opérations de registre à décalage sont mémorisés par rapport aux polynômes $m_i(x)$ caractéristiques, avec $m_i(x) = [x^{Ni}]$ mod f.

**17.** Dispositif suivant la revendication 16, dans lequel le moyen (101) de détermination d'un masque de prélèvement caractéristique pour N' opérations de registre à décalage comprend :

- un moyen de calcul d'une décomposition de N en une somme de k nombres N entiers $N = \sum_{i=1}^{k} N_i$,

dans lequel k > 1, et
- un moyen (102) de production d'adresses pour lire les jeux de coefficients se rapportant aux polynômes $m_{i(j)}$ (x) caractéristiques de la décomposition $N' = \sum_{j=1}^{k'} N_{i(j)}$ avec k'< k dans la mesure où N' < N.

**18.** Dispositif suivant l'une des revendications 14 à 17, dans lequel le moyen de détermination d'un masque de prélèvement caractéristique pour N' opérations de registre à décalage du dispositif de registre à décalage et le moyen pour effectuer n opérations de registre à décalage en utilisant le masque de prélèvement sont réalisés sous la forme d'un processeur (100).

**19.** Dispositif suivant l'une des revendications 14 à 17, dans lequel le moyen de détermination d'un masque de prélèvement caractéristique pour N' opérations de registre à décalage du dispositif de registre à décalage est réalisé sous la forme d'un processeur (100), et
en ce que le moyen pour effectuer n opérations de registre à décalage de registre à décalage est réalisé sous la forme d'un registre (SR) à décalage, comprenant n cellules ($R_1$, $R_2$, ..., $R_n$) de registre à décalage avec un câblage (F; F1) de fonction extérieur, défini par le polynôme f(x) caractéristique et un câblage (A) de prélèvement pouvant être commandé par le masque de prélèvement calculé.

**20.** Dispositif suivant l'une des revendications 16 à 19, comprenant un autre registre (SR1) à décalage comprenant n cellules ($R_1$, $R_2$, ..., $R_n$) de registre à décalage ayant un câblage (F1) de fonction extérieur, défini par le polynôme f(x) caractéristique, dans lequel l'état final comprenant n bits du dispositif de registre à décalage est inscrit en tant qu'état d'initialisation.

**21.** Utilisation d'un dispositif suivant l'une des revendications 14 à 20, de production d'une séquence d'étalement ayant un décalage de n bits dans un système de transmission CDMA, notamment dans un système de transmission CDMA correspondant à l'une des normes de transmission UMTS ou IS-95.

**22.** Utilisation suivant la revendication 21, dans laquelle il est fixé par un numéro N de code donné le décalage d'une séquence d'étalement, l'état final comprenant n bits et itéré N fois étant utilisé comme état d'initialisation pour la production de la séquence d'étalement associée au numéro N de code.

Fig.1

Fig.2

$X_{anf}$ oder $X_{inter}$

$Ad(N_1),...,Ad(N_k)$

$m_0,...,m_{n-1}$

SR

16

$X_f$

140

$N_1,...,N_k$

$\overline{f(x)}$

$X_f$

130

$X_{anf}$

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6005888 A

- US 6038577 A

**In der Beschreibung aufgeführte Nicht-Patentliteratur**

- 3GPP: Spreading and modulation (FDD). *3rd Generation Partnership Project TS 25.213,* Dezember 2001, vol. 4.2.0
- **J.S. Lee ; L.E. Miller.** CDMA Systems Engineering Handbook. Artech House, 1998

- 3GPP: Physical channels and mapping of transport channels onto physical channels (FDD). *3rd Generation Partnership Project TS 25.211,* 1999